(19) Europäisches Patentamt
European Patent Office
Office européen des brevets

(11) **EP 4 366 338 A1**

(12) **EUROPEAN PATENT APPLICATION**

(43) Date of publication:
**08.05.2024 Bulletin 2024/19**

(21) Application number: **22205878.6**

(22) Date of filing: **07.11.2022**

(51) International Patent Classification (IPC):
*H04W 4/30* (2018.01)

(52) Cooperative Patent Classification (CPC):
**H04W 4/30; H04N 21/43637; H04N 21/4788**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Intel Corporation**
**Santa Clara, CA 95054 (US)**

(72) Inventors:
- **RESHEF, Ehud**
  **36551 Qiryat Tivon (IL)**
- **SUBRAMANYA, Bala**
  **560037 Bangalore (IN)**
- **THAKUR, Jayprakash**
  **560035 Bangalore (IN)**
- **HANCHATE, Mallari**
  **586103 Bangalore (IN)**
- **WAGHELA, Yagnesh**
  **560049 Bangalore (IN)**
- **SUBRAMANIAN, Sudhakaran**
  **560103 Bangalore (IN)**
- **HEGDE, Mythili**
  **560078 Bangalore (IN)**
- **DAS, Sajal Kumar**
  **560115 Bangalore (IN)**
- **UMMELLA, Vijaya Prasad**
  **Santa Clara, 95054 (US)**
- **BEKAL MANAMOHAN, Praveen Kumar**
  **Santa Clara, 95054 (US)**
- **BHAT, Praveen Kashyap Ananta**
  **Bangalore (IN)**
- **R, Aneesh**
  **629175 Thuckalay (IN)**
- **A.N, Sudhakar**
  **Bengaluru (IN)**
- **SANGLE, Parshuram**
  **416234 Kolhapur (IN)**
- **MURUGAN LATHA, Padmesh**
  **Santa Clara, 95054 (US)**
- **KAMAT, Satyajit Siddharay**
  **560102 Bangalore (IN)**
- **SINGH, Balvinder Pal**
  **490020 Bhilai (IN)**
- **RAIGURU, Manisha**
  **Santa Clara, 95054 (US)**
- **MISHRA, Soumya Prakash**
  **Santa Clara, 95054 (US)**
- **GARG, Isha**
  **Santa Clara, 95054 (US)**
- **KROVVIDI, Srinivas**
  **500090 Hyderabad (IN)**
- **MALKHEDE, Yogesh**
  **Santa Clara, 95054 (US)**
- **GUPTA, Sagar**
  **Ghaziabad (IN)**
- **PEDDIREDDY, Prathibha**
  **560087 Bengaluru (IN)**
- **K, Vishnu**
  **680301 Thrissur (IN)**
- **PAMMI, Lakshmiravikanth**
  **Santa Clara, 95054 (US)**
- **TIWARI, Padmavathi**
  **560032 Bangalore (IN)**

(74) Representative: **Viering, Jentschura & Partner mbB**
**Patent- und Rechtsanwälte**
**Am Brauhaus 8**
**01099 Dresden (DE)**

(54) **SYSTEMS, METHODS, AND DEVICES FOR WIRELESS COMMUNICATION**

(57)    A wireless device including one or more processors that couple to an interface of a wireless circuit or wireless circuitry is configured to obtain an indication to perform a multi-user timesynchronized action and generate a plurality of messages each indicating the multi-user timesynchronized action to be performed, and wirelessly transmit a series of broadcast beacons each respectively including a one of the plurality of generated messages.

FIG. 10

**Description**

Technical Field

Various embodiments relate to wireless communication.

Background

Wireless technologies such as Bluetooth version 5 (v5), and later versions, support multipoint technology in which a single device can be wirelessly connected to multiple other devices, e.g., through multipoint Bluetooth, and interact simultaneously with both. One of the most common uses of multipoint Bluetooth is wireless multipoint Bluetooth headsets. Multipoint Bluetooth headsets can connect to two devices and output sound from both devices simultaneously, which is sometimes an annoying experience for a user. To counter the annoyance of having two simultaneous outputs, many manufacturers select one output that appears in the background, and the other takes center stage. But this approach is not user-friendly and requires user intervention to select the right input source to get the right sound output. Further, Bluetooth-enabled devices like headphones, headsets, or speakers, when paired to multiple devices like a laptop, mobile phone, etc., require manual intervention to establish a specific connection and to deselect the existing connection in one device.

Brief Description of the Drawings

In the drawings, like reference characters generally refer to the same parts throughout the different views. The drawings are not necessarily to scale; emphasis instead generally being placed upon illustrating the principles of the invention. In the following description, various aspects of the invention are described with reference to the following drawings, in which:

FIG. 1 shows an exemplary diagram illustrating an environment including devices 100a-c that can communicate wirelessly with other devices or networks according at least to one example of the present disclosure.
FIG. 2 shows a computing device and network adaptor according to at least one example of the present disclosure.
FIG. 3 shows a method according to at least one example of the present disclosure.
FIG. 4 shows a method according to at least one example of the present disclosure.
FIG. 5 shows an exemplary diagram of an environment including devices capable of communicating wirelessly with other devices or networks according to at least one example of the present disclosure.
FIG. 6 shows a method according to at least one example of the present disclosure.
FIG. 7 shows a method according to at least one example of the present disclosure.
FIG. 8 shows a diagram of an environment including a plurality of user devices according to at least one example of the present disclosure.
FIG. 9 shows a method according to at least one example of the present disclosure.
FIG. 10 shows time diagrams representing an example of the performance of an exemplary method according at least one example of the present disclosure.
FIG. 11 shows a method according to at least one example of the present disclosure.

Description

The following detailed description refers to the accompanying drawings that show, by way of illustration, exemplary details and aspects in which the invention may be practiced.
The word "exemplary" is used herein to mean "serving as an example, instance, or illustration". Any aspect or design described herein as "exemplary" is not necessarily to be construed as preferred or advantageous over other aspects or designs.
Throughout the drawings, it should be noted that like reference numbers are used to depict the same or similar elements, features, and structures unless otherwise noted.
The terms "at least one" and "one or more" may be understood to include a numerical quantity greater than or equal to one (e.g., one, two, three, four, [...], etc.). The term "a plurality" may be understood to include a numerical quantity greater than or equal to two (e.g., two, three, four, five, [...], etc.).
The words "plural" and "multiple" in the description and the claims expressly refer to a quantity greater than one. Accordingly, any phrases explicitly invoking the aforementioned words (e.g., "plural [elements]", "multiple [elements]") referring to a quantity of elements expressly refers to more than one of the said elements. The phrases "group (of)", "set (of)", "collection (of)", "series (of)", "sequence (of)", "grouping (of)", etc., and the like in the description and the claims, if any, refer to a quantity equal to or greater than one, i.e., one or more. The phrases "proper subset", "reduced subset", and "lesser subset" refer to a subset of a set that is not equal to the set, illustratively, referring to a subset of a set that contains fewer elements than the set.

The phrase "at least one of' with regard to a group of elements may be used herein to mean at least one element from the group, including the elements. For example, the phrase "at least one of' with regard to a group of elements may be used herein to mean a selection of: one of the listed elements, a plurality of one of the listed elements, a plurality of individual listed elements, or a plurality of a multiple of individual listed elements.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in the form of a pointer. However, the term "data" is not limited to the examples mentioned above and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit, and may also be referred to as a "processing circuit," "processing circuitry," among others. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. As used herein "interface" may be a device, circuit, circuitry, and/or program enabling communication with another device, circuit, program, etc."

Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality, among others, and conversely that any single processor, controller, or logic circuit described herein may be realized as two (or more) separate entities with equivalent functionality, among others.

As used herein, "memory" is understood as a computer-readable medium in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "send," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the processors or controllers perform the logical transmission and reception over the software-level connection. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

As used herein, a signal that is "indicative of" a value or other information may be a digital or analog signal that encodes or otherwise communicates the value or other information in a manner that can be decoded by and/or cause a responsive action in a component receiving the signal. The signal may be stored or buffered in a computer-readable storage medium prior to its receipt by the receiving component. The receiving component may retrieve the signal from the storage medium. Further, a "value" that is "indicative of" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same even as such characteristics are adapted. In general, so long as a signal continues to encode the same information, the signal may be considered the same signal. For example, a transmit signal may refer to the transmit signal in baseband, intermediate, and radio frequencies.

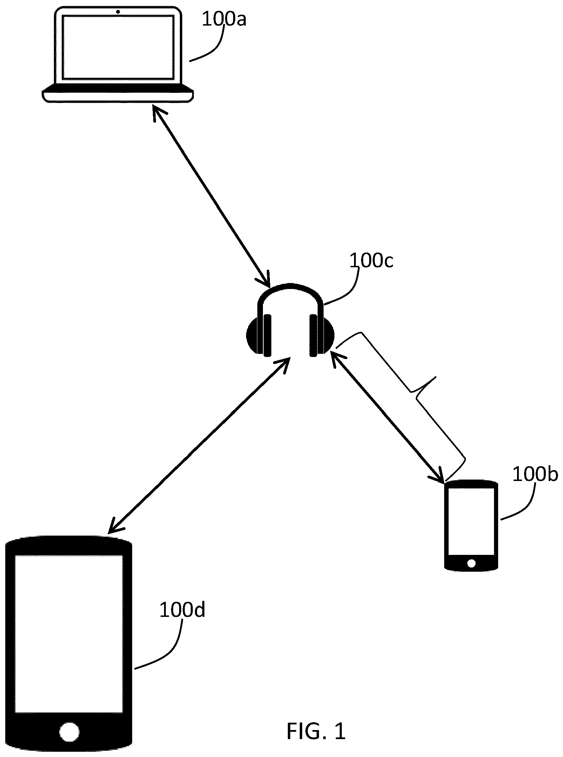

FIG. 1 shows an exemplary diagram illustrating an environment including devices 100a-c that can communicate wirelessly with other devices or networks. Each of the devices 100a-d may implement one or more of various types of wireless communications protocols. In this example, the computing device 100a can wirelessly communicate with at least device 100c.

Similarly, device 100b can also wirelessly communicate with device 100c.

In the example of FIG. 1, the devices 100a-c may communicate with each other or with other devices through a Bluetooth protocol. In some cases, the devices 100a-c may also communicate with other devices or networks using other protocols, such as, for example, through a Wi-Fi protocol, or a cellular protocol, to name a couple.

In the example of FIG. 1, the devices 100a and 100b can be host devices. Further, the devices 100a and 100b are host devices capable of providing and streaming media content to other peripheral devices. For example, the devices 100a and 100b can each be configured to stream content, e.g., media in the form of music, video, etc., at least the device 100c.

The device 100c can be a peripheral or accessory device, which in FIG. 1, can be headphones. The accessory device 100c can be configured to obtain or receive streaming content. For example, the device 100c may obtain streaming content through wireless technology, e.g., Bluetooth protocol, from one or both devices 100a and 100c.

In the example of FIG. 1, the host device 100a can be a laptop capable of or configured to stream media content, while the host device 100b may be a smartphone similarly capable of or configured to stream media content.

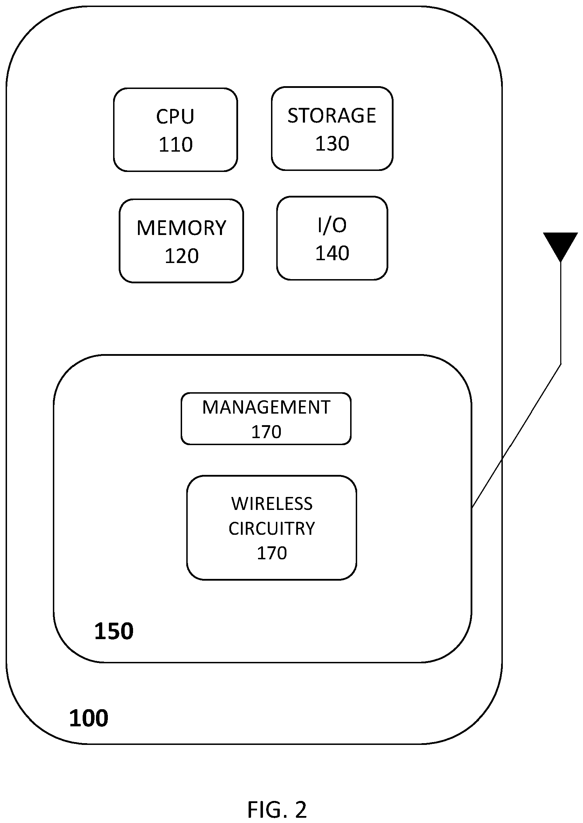

FIG. 2 shows an exemplary electronic device 100. Each of the devices 100a-c may be realized as or configured similarly to the electronic device 100 of FIG. 2. The devices may include at least one processor 110, a memory 120, a storage device 130, and an I/O controller 140. The storage device 130 can include, without limitation, an operating system, software, drivers, and/or applications. One or more applications may be implemented or executed by the electronic device 100. These applications may include programs that communicate wirelessly to another device or, for example, to a network, e.g., using the network adaptor 150. The electronic device 100 includes one or more data buses (not shown) to operably connect the various components of the electronic device 100. The at least one processor 110 can interface with the network adaptor and/or the wireless circuitry 150.

The network adaptor 150 may be a component with circuitry that enables the electronic device 100 to communicate with a network or other devices.

The electronic device 100 may be any device including at least one processing circuit and configured to communicate wirelessly, e.g., a smartphone, a tablet device, a desktop or personal computer, a mobile phone, a laptop, a netbook computer, a workstation, a server, a mobile medical device, a camera, a wearable device, an Internet-of-Things (IoT) device, etc.

The network adaptor 150 can include electronic components (e.g., hardware and/or software) for realizing communication and can implement a physical layer and a data link layer (e.g., including a Medium Access Control (MAC) layer). In the example of FIG. 2, the network adaptor 150 can include components, e.g., wireless circuitry, to communicate using a plurality of wireless communication protocols. Specifically, the network adaptor 150 can at least include a wireless circuitry or a wireless communication circuit 160 to communicate using one or more wireless communication protocols.

The network adaptor 150 or network interface card (NIC) is capable of or configured to wirelessly transmit and receive data, e.g., packets of data to connect the device 100 to other devices or computer networks. The network adaptor 150 can include electronic components for communication and implement a physical layer and a data link layer (e.g., including a Medium Access Control (MAC) layer). Components, such as a receiver, transmitter, processing circuitry, and other network adaptor components, are omitted for simplification. The network adaptor 150 may include a manager circuitry 170 responsible for managing or scheduling communication operations, e.g., transmission or reception by each wireless circuit. For example, the manager circuitry or manager 170 may communicate using the wireless circuitry 160. The manager 170 may be a component in the form of hardware and/or software (e.g., processor/controller executing instructions) for interfacing or communicating, at least with the wireless circuitry 160.

According to one or more exemplary embodiments of the present disclosure, wireless devices for receiving streaming media content may automatically switch between sources or devices streaming or configured to stream media content.

Referring to FIG. 1, the device 100c may be configured to receive or obtain streaming media content from device 100a or device 100b. For example, the device may receive media content directly through a wireless protocol from the host device 100a or 100b. As previously discussed, a Bluetooth protocol may be used. In some cases, Bluetooth technology may allow streaming content to be received by the device 100c from the host device 100a and host device 100b. However, in many cases, it may be undesirable for the accessory device 100c to obtain streaming media content from a plurality of hosting sources. For example, the headphones/headset 100c receiving streaming content such as music from both devices 100a and 100b can be undesirable because it would result in simultaneously playing music from two sources.

Accordingly, the device 100c can be configured to automatically switch between streaming devices (e.g., streaming sources) based on a plurality of factors. For example, an accessory device for receiving streaming content may connect (e.g., pair) with one out of a plurality of host devices (devices configured to stream content) based on determined proximities to the host devices.

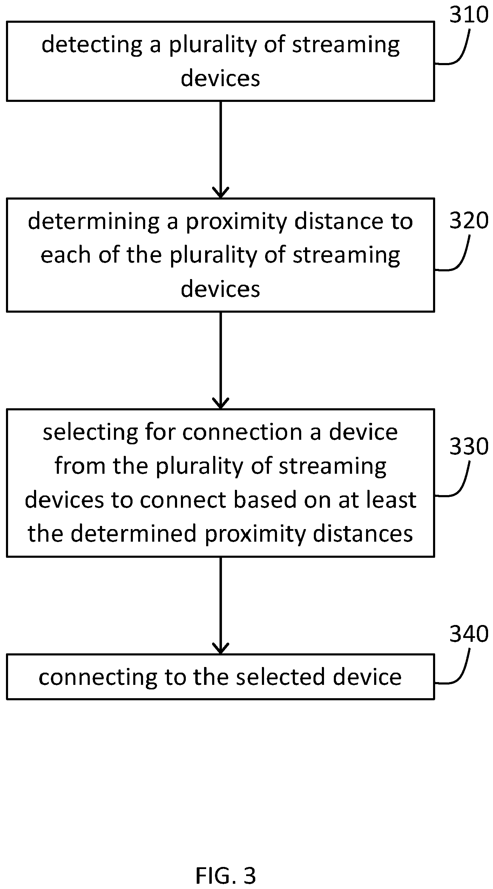

FIG. 3 shows a method 300 according to at least one example of the present disclosure. The method 300 can be performed by a wireless user device, e.g., an accessory device configured to communicate wirelessly for connecting to a streaming or host device. The method may be performed where the accessory device is not connected and not streaming any content from a host device. The method 300 may be performed by one or more accessory device processors coupled to a wireless circuitry interface. The wireless circuity, for example, may be configured to implement a wireless technology such as Bluetooth.

The method 300 may be implemented by an application or software executing on a wireless user device. One or more processors of the device may execute instructions stored on a non-transitory computer-readable medium of the wireless user device to perform the method 300.

The method 300 includes detecting a plurality of streaming/host devices at 310, determining a proximity distance to each of the plurality of streaming devices at 320, selecting for connection a device from the plurality of streaming devices to connect based on at least the determined proximity distances at 330, and connecting to the selected device streaming device at 340.

The detection of streaming/host devices by the accessory devices can be done by pairing, e.g., a Bluetooth pairing process.

In at least one exemplary case, the selected streaming device can be the streaming device determined to be the closest based on the determined proximities or proximity distances. In other instances, additional factors or considerations may be determined and used in addition to the determined proximity distances for selecting a streaming device for connection.

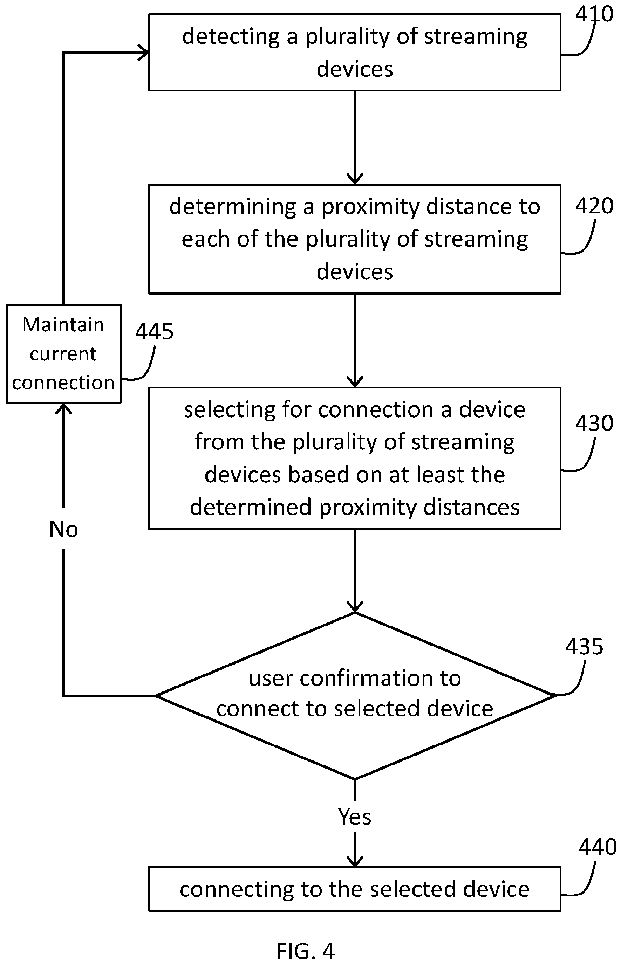

Further, methods, such as or similar the method 300 may be performed in the case where the accessory device is already connected to a streaming device. FIG. 4 shows an exemplary method 400 for a device to select a hosting or streaming device and connect to a selected device when the device is already connected to a streaming device.

In FIG. 4, an accessory device can perform the method 400 while connected to a streaming device. For example, referring back to FIG. 1, the accessory device 100c may be connected to and wirelessly receiving streaming content from the device 100a. However, after being connected to the device 100a, other connectable devices, namely devices 100b and 100-d may have become located within the vicinity of device 100c. Thus, the device 100c, while currently connected and streaming content from the device 100a, may perform the method 400.

The method 400 may also be implemented by an application or software executing on a wireless user device. One or more processors of the device may execute instructions stored on a non-transitory computer-readable medium of the wireless user device to perform the method 400.

The method 400 includes 410, detecting a plurality of streaming/host devices at 410. At 410, the detected devices may be devices that have become connectable or within a connectable vicinity of the accessory device and may include the device to which the accessory device is currently connected. Further, after detecting the devices, the method 400 includes 420, determining a proximity distance to each detected plurality of streaming devices at 420. The method 400 further includes selecting for connection one device from the detected plurality of streaming devices based on at least the determined proximity distances at 430. However, in the method 400, at 435, the accessory device the user confirms whether the accessory device is to connect to the selected device. If the user confirms connection to the selected device at 435, then the method 400 proceeds to connecting to the selected device streaming device at 440.

If the user does not confirm the connection to the selected device at 435, then the method maintains the current connection at 445.

The user may confirm or not the selection using the accessory device or the selected streaming/hosting device. For example, if the selected hosting device is the tablet 100d, the user confirms the connection by pressing a confirmation message indication appearing on the screen of the tablet 100d. Similarly, the user may select a suitable or appropriate input, e.g., a button, on the accessory device to indicate confirmation or denial of the connection to the selected host device.

In connecting to the selected device 440, the accessory device implementing the method 400 can switch connections from the previous device it was connected to the selected device. This switch may include disconnecting from the previous connection.

For example, in the context of FIG. 1, if the accessory device 100b is connected to the device 100a, implements the method 400, and, as a result, decides to connect to device 100c, then the connection to device 100a may be terminated.

In some instances, it may be useful not to consider all detected devices in performing the connection methods 300 and 400. That is, some devices may be detected, for example, at 320 of FIG. 3 or 420 of FIG. 4 have only been recently active or present. Devices with a transient presence or a relatively short active presence may not be realistically considered as a device for streaming. As such, the methods such as method 300 and method 400 may be modified to exclude from consideration some devices with a short, determined presence to the accessory device.

In one instance, methods such as method 300 and the method 400 may include determining a presence duration for each of the plurality of detected streaming devices. The determined presence duration can indicate the time or duration the device has been available for connection, e.g., to the accessory device. Further, the selection of a device from the detected plurality of streaming devices can be limited to a subset of devices with a presence duration greater than a threshold amount. The subset may be all or a smaller portion of the detected plurality of streaming devices. The threshold may be predefined and have a very short duration, such as 10 seconds or less, 5 seconds or less, or 2 seconds or less.

As noted, the selection of a device for connection may be based on the determined proximity distances. The proximity distances may be determined using signal power. More specifically, the proximity distances for each detected device may be determined by performing a distance measurement using a received signal strength indicator (RSSI) value for each of the detected devices. The RSSI value may be determined using a transmit power independent scaling method for each detected plurality of devices.

Different electronic devices may belong to different power classes (for Bluetooth, there are three defined power classes, e.g., class 1, 2, 3) and may have different maximum transmit power capabilities. Hence, a transmit power-independent method will be more accurate for distance computation from such devices. The method of determining proximity distances may be implemented using Bluetooth technology.

A proximity or proximity distance can be determined based on RSSI using a transmit power independent scaling method. This method relies on the knowledge that received power (Pr) is determined as follows

$$Pr = Pt{\times}Gt/(4{\times}\pi{\times}R^2) = K/R^2$$

$$Or,\ R = Sqrt\ (K/Pr)$$

where $Pt$ is the transmitted power from the source,
$Gt$ is transmitted power gain,
$R$ is the distance from the transmitter, and
$K$ is the constant for a particular device. (The value of K varies for different devices.)

For a first-time device pairing, a receiver or accessory device (e.g., a headset) can be at a certain distance away from the transmitter (hosting) device, which can be, for example, a mobile phone, a tablet, laptop, desktop, etc. During that time the receiver/accessory device (e.g., headphones, headset, speaker, etc.) can measure the received power $Pr$ for a certain distance or $R$-value (which can be the same for all transmitter devices). Further, the $K$ value can be empirically derived and stored in the receiver/accessory device for that particular transmitter device, which can be considered as paired device Mobile phone-1. This $K$ value can be stored against the devices' MAC-ID (each device has its unique MAC (medium access control) ID. The $K$ value is available in the signal from the accessory device. For example, during pairing, each device transmits its MAC ID. In other words, a first pairing or calibration may need to be performed before performing the transmit power independent scaling method, e.g., by an accessory device.

Table 1 Showing Exemplary $K$ values for device pairings

| Paired Device | K value |
| --- | --- |
| Mobile phone-1 | 0.6 |
| Tablet | 0.9 |

After the first or first-time calibration has been performed, e.g., during a first pairing, the obtained $K$ value is stored and later used for computation of scaled received power value from the transmitters device using the above equation because now $K$ is known, $Pr$ is known, and therefore distance $R$ can be computed or determined dynamically.

The proximity distances can be determined with other devices. $R$ may be expressed in terms of absolute distance unit or absolute value. In the case of multipoint pairing, a distance is between one host to multiple devices or one accessory to multiple hosts. Bluetooth technology supports transmit powers from -20 dBm (0.01 mW) to +20 dBm (100 mW). The K values for BT class-1, class-2, and class-3 devices can be precomputed empirically during the initial device setup time. Later, during the pairing time, once the device class is known, then the appropriate K value will be applied and remembered/stored against its MAC ID. The devices are uniquely identified by their unique MAC ID. So, later, once the MAC ID is detected, the respective K value will be applied as stored.

Other methods or schemes may be used to determine proximity or proximity distances. For example, a proximity sensor may be used, and the proximity sensor may receive signals from devices that can be used to determine the proximities. In one case, an ultra-wideband (UWB) technology can be implemented with the accessory and streaming devices. A UWB sensor of the accessory device can be used to determine the proximity to different connected devices. That is, a UWB ranging method can be implemented with a device that transmits and receives UWB pulses and measures the time of flight, e.g., propagation delay, and based on that, it measures the range or the distance between the two devices.

**EP 4 366 338 A1**

As described herein, e.g., in connection with methods 300 and 400, an accessory device may rely on determined proximities or proximity distances to connect to streaming devices. However, the accessory device may also rely on user settings or preferences for selecting and connecting to a streaming device. For example, the accessory device may rely on a connection or user profile which can be used in conjunction with the determined proximities to select and connect to a streaming device. The connection profile can include information indicating the priority of devices to connect to. This priority may be reflective of user preferences for connection. Accordingly, some devices may be ranked higher for connection than other devices. The connection profile may be loaded based on user input-based selection.

In one example, if two streaming devices have the same proximity or are within the same proximity range to the accessory device, then the connection profile may indicate which of the two devices to select. In other instances, the connection profile may also indicate priority in terms of other factors, such as the streaming content of the streaming devices (e.g., audio, video, etc.).

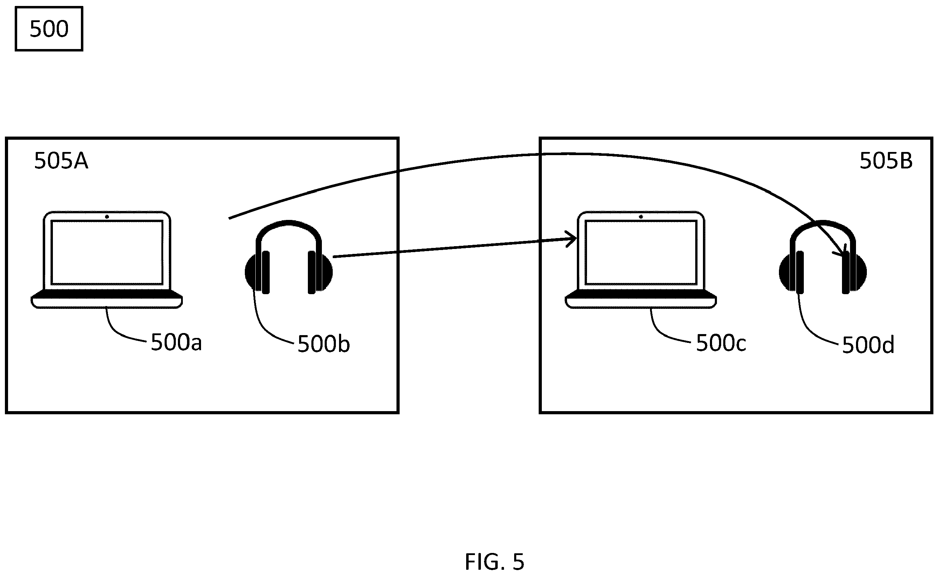

FIG. 5 shows an exemplary diagram 500 illustrating an environment including devices 500a-d capable of communicating wirelessly with other devices or networks. Each of the devices 500a-d may have components similar to the device 100a-d and have components or configurations the same as or similar to the wireless device 100 described in FIG. 2. Similar to the devices 100a-d, the devices 500a-d may wireless communicate using one or more communication protocols or technologies, such as Bluetooth.

In FIG. 5, the devices 500a-d may be arranged as shown. The laptops 500a and 500c can be considered hosting devices, that is, devices that can stream or provide content to other devices, such as headsets, speakers, etc. Further, the devices 500b and 500d can be considered accessory devices, configured to obtain and use (e.g., consume) content from a hosting device.

In FIG. 5, the device 500a (laptop) and device 500b (headset) may be arranged together in one room or section 505A while the device 500c (laptop) and device 500d (headset) are arranged in section or room 505B. In the example of FIG. 5, the device 500b may be located or arranged closer to the hosting device 500a than to the hosting device 500c. Similarly, the device 500d is arranged closer to the hosting device 500c than the hosting device 500a.

However, in some cases, based on previously established connections, the devices 500b and 500d may not establish desired connections. For example, suppose the accessory device 500b attempts to establish a connection to a hosting device, and in that case, the accessory device 500b may undesirably establish a connection to the hosting device/laptop 500c despite its closeness to device 500a. This connection may occur if the device 500b was previously paired and connected to the hosting device 500c. Similarly, the accessory device 500d may automatically connect to hosting device 500a despite its proximity to device 500c because of a previously established connection to device 500a.

According to one or more examples, the devices described herein can be configured to establish connections automatically. For example, the accessory devices 500b and 500b may automatically connect to hosting devices and vice versa.

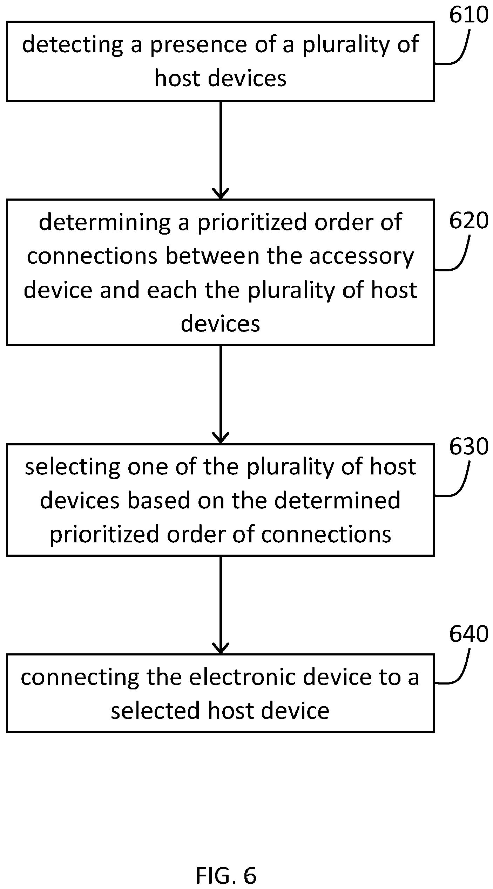

FIG. 6 shows an exemplary method 600, which can be performed by a wireless device, e.g., an accessory device or user device configured to communicate wirelessly for connecting to a streaming or host device. The method may be performed where the accessory device has not connected and is not yet receiving streaming content from a host device. The method 600 may be performed by one or more accessory device processors coupled to a wireless circuitry interface. The wireless circuity, for example, may be configured to implement a wireless technology such as Bluetooth. The accessory device may be represented by the device 100 of FIG. 2 or variations thereof.

The method 600 may also be implemented by an application or software executing on a wireless user device. One or more processors of the device may execute instructions stored on a non-transitory computer-readable medium of the wireless user device to perform the method 600.

The method 600 includes, at 610, detecting a presence of a plurality of host devices. The detection may include detecting devices configured to stream media or content and are available for establishing a connection to the electronic or accessory device. At 620, the method includes determining a prioritized order of connections between the accessory device and each of the plurality of host devices. The method includes at 630 selecting one of the plurality of host devices based on the determined prioritized order of connections, at 640, connecting the electronic device to a selected host device. In many instances, the method 600 may include selecting the highest priority or highest ranked connection of the determined prioritized order of connections.

The method 600 may be implemented when the accessory device is turned on or exits a standby mode and is prompted to initiate a pairing process. For the method 600, connecting the electronic/accessory device to the selected one of the plurality of host devices based on the determined prioritized order of connections is selecting the host device with the highest priority connection. In other words, the accessory device connects to the device associated with the determined highest priority connection.

The prioritized order of connections to the plurality of host devices can be determined by determining proximity distances between the accessory/electronic device and the plurality of host devices. Further, in determining or generating and prioritizing the order of connections, a higher priority may be given to connections with host devices having shorter determined proximity distances to the accessory device, and a lower priority may be given to connections with host

8

devices with greater proximity distances to the host device. In other words, the proximity distance can be at least one factor or consideration in determining the prioritized order of connections. In one instance, it can be the sole consideration.

Any suitable method described herein can be implemented to determine the distances between the accessory device and the host devices.

According to one or more examples, the accessory device may implement and use Bluetooth technology, specifically Bluetooth Low Energy (BLE), to connect to a host device. Further, the accessory device may determine proximity distances using wireless beacons, such as BLE beacons. The beacon support or BLE beacon support hardware or technology may be integrated into the accessory device and the host devices. In such a case, the proximity distance can be based on various parameters, including RSSI, advertising interval, measured power, and environmental factors.

Generally, a Bluetooth beacon can be realized from a small wireless device or hardware transmitter that works based on Bluetooth Low Energy. It repeatedly transmits a constant signal that other devices can detect. For example, a Bluetooth beacon can be configured to broadcast a radio signal, including a combination of letters and numbers transmitted at short, regular intervals. A Bluetooth-equipped device like a smartphone, gateway, or access point can "see" a beacon once it is in range.

RSSI, or Received Signal Strength Indicator, indicates the strength of the beacon's signal as received by the host. RSSI is inversely proportional to the distance.

A beacon's or BLE beacon's broadcasting interval may range from a few hundred milliseconds to a few seconds. In general, the smaller the interval, the better the accuracy of distance detection due to stable signals.

Measured Power can be a factory-calibrated, read-only constant that indicates what's the expected RSSI at 1 meter to the beacon. RSSI and measured power can be expressed in dBm or Watts.

Environmental factors: External factors influencing radio waves- absorption, interference, or diffraction. External factors can indicate loss and can be expressed in power unit (Watt or dBm)

The above factors may be used to determine (e.g., approximate) the distance or proximity between the host and accessory device with the formula:

$$Distance = 10 \wedge ((Measured\ Power - RSSI)/(10 \times Environmental\ factors\,))$$

In some examples, determined or calculated proximity distances can be the sole factor in prioritizing connections. In other cases, other factors or considerations can be used to determine the prioritized order of connections.

In one example of the method 600, determining the prioritized order of connections between the accessory device and each of the plurality of host devices at 620 may further include determining user engagement for each of the host devices. In such a case for determining the prioritized order of connections, a higher priority may be given or weighted to connections with host devices having greater user engagement. A lower priority may be given or weighted to connections with host devices having lower user engagement or user activity.

For the method 600, determining the prioritized order of connections between the accessory device and each of the plurality of host devices at 620 may be based on a determined user intent or obtained user intent indication for each of the plurality of devices. In one case, this may include determining whether a user is attached, e.g., wearing or holding a host device. In such a case, this determination can indicate a user's intent and priority, or a higher priority in the prioritized order of connections is given or weighted to devices that are attached to a user.

Further, for the method 600, determining the prioritized order of connections between the accessory device and each of the plurality of host devices at 620 may be based on the device type for each detected host device. Accordingly, determining the prioritized order of connections can include determining a device type for each detected host device, and the connections can be prioritized based on the determined device types. Said differently, connections to host devices of certain types may be given higher priority. For example, connections to laptops may be given higher priority than those to tablet or smartphone devices.

For the method 600, during or after connecting or establishing the connection to a selected host device at 640, the accessory device may disconnect or deprioritize existing connections to the extent they exist.

The method 600 described in FIG. 6 may be repeated, e.g., for one or more iterations. However, to avoid unintentional switching of connections, the method 600 may include determining that the selected host device is currently idle after establishing the selected connection to the selected host device. That is, if the host device is idle, e.g., no longer streaming content to the accessory device, the method may proceed to performing:

detecting a presence of a second plurality of host devices are configured to stream media and are each available for establishing a connection; determining a second prioritized order of connections to the second plurality of host devices; selecting a second host device from the second plurality of host devices based on the second prioritized order of connections; and connecting the electronic device to the second selected host device.

However, suppose there is still content streaming to the accessory device. In that case, the pairing or connection between the accessory device and host device should be maintained or honored despite other connections possibly having higher prioritized connections in the manner previously determined, e.g., other devices are now closer because of movement by the accessory device away from the host. Similarly, suppose certain applications in the accessory device may use the streaming content in the connection. In that case, the connections should be maintained, such as video or audio calls with the paired or connected accessory device and the host device.

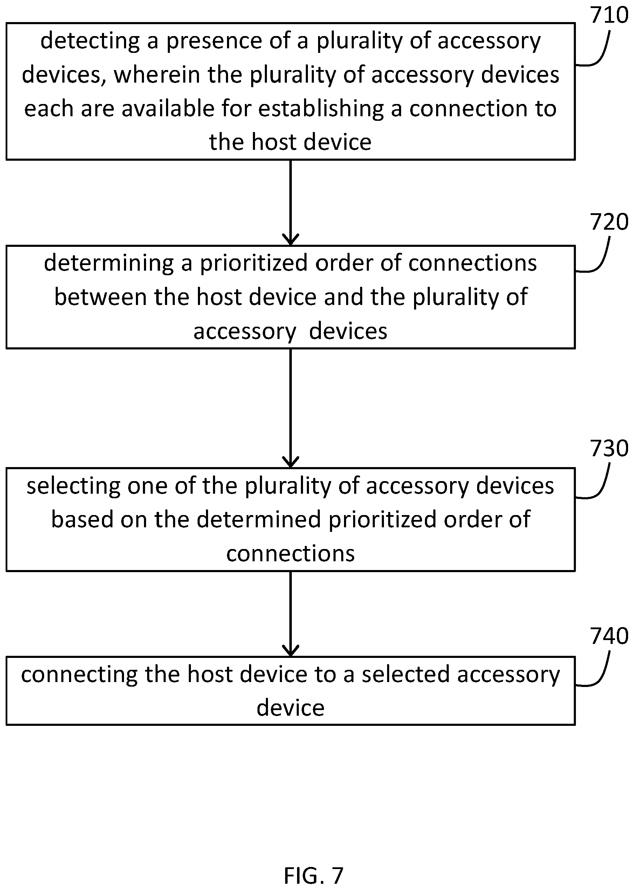

FIG. 7 shows an exemplary method 700, which can be performed by a host device, e.g., a wireless device configured to provide and transmit and stream content to an accessory device. The method 700 may be performed where the host device has not connected to an accessory device and has not yet begun streaming content. The method 700 may be performed by one or more processors of the host device coupled to an interface of a wireless circuitry of the host device. The wireless circuity, for example, may be configured to implement a wireless technology such as Bluetooth. The host device may be represented as the device 100 of FIG. 2 or variations thereof.

The method 700 may also be implemented by an application or software executing on a device configured to communicate wirelessly. One or more processors of the device may execute instructions stored on a non-transitory computer-readable medium of the wireless user device to perform the method 700.

The method 700 may include, at 710, detecting a presence of a plurality of accessory devices, wherein the plurality of (user) devices each are available for establishing a connection to the host device. At 720, the method 700 includes determining a prioritized order of connections between the host device and the plurality of (user) devices. At 730, the method 700 includes selecting one of the plurality of (user) devices based on the determined prioritized order of connections; and includes, at 740, connecting the host device to the selected device.

As described in connection to the method 600, determining the prioritized order of connections to the plurality of accessory devices in the method 700 can include determining proximity distances between the host device and the plurality of accessory devices. Again, in determining or generating the prioritized order of connections, a higher priority may be given (or weighted) to connections with accessory devices having shorter determined proximity distances to the host device. A lower priority may be given (or weighted) to connections with accessory devices with greater or longer proximity distances to the host device. As before, the proximity distance can be at least one factor or consideration in determining the prioritized order of connections. In some cases, it may be the sole consideration or sole factor. Any suitable method described herein can be implemented to determine the distances between the accessory device and the host devices.

As before, when the host device and accessory device can implement and use Bluetooth technology and Bluetooth Low Energy (BLE) to connect to a host device. Using BLE beacons, the host device implementing the method 700 may determine proximity distances; hence, BLE or beacon support is integrated with the host device and accessory devices. As described before, the proximity distance can be based on parameters including RSSI, advertising interval, measured power, and environmental factors, as indicated in the preceding equation above.

Concerning the method 700 of FIG. 7, other considerations or factors besides proximity distances may be used in prioritizing connections to accessory devices at 720.

For the method 700, determining the prioritized order of connections between the accessory device and each of the plurality of host devices at 720 may be based on determining a user intent or obtaining a user intent indication for each of the plurality of devices. In one case, this may include determining whether a user is attached, e.g., wearing or holding an accessory device.

For example, the accessory device indicates, e.g., provides a signal to the host device that the accessory device is being worn.

In other cases, the user intent indication may be determined in other manners. In one instance, the host device (e.g., a desktop, laptop, tablet, etc.) may use visual sensing to determine an accessory device's attachment or wearing status. This visual sensing may be accomplished by the host device through low-power vision sensing using a camera and a lid controller hub (LCH) to determine if the user is in front of the host device. The host device may include face detection circuitry and/or hardware to determine whether the user is attached or wearing an accessory device such as headphones, earphones, etc.

For example, suppose the user is wearing headphones. In that case, the hosting device can assume the default connection to the nearest headphone and make the connection to headphones a higher priority (weighted more) than other connections or the highest priority connection. These determinations can help in further solving the connection priority between multiple devices. In short, a determined user's intent can result in a higher priority in the prioritized order of connections given or weighted to devices to which the user is attached.

Further, for the method 700, determining the prioritized order of connections between the host device and each of the plurality of accessory devices at 720 may be based on the device type for each of the detected plurality of host devices. Accordingly, determining the prioritized order of connections may include determining a device type for each of the detected plurality of accessory devices. Again, connections can be prioritized based on the determined device type, with connections to certain types of accessory devices given a higher priority than connections to other types of accessory devices. For example, a connection to a headset may be prioritized (given higher priority) over a pair of speakers or vice versa.

For the method 700, during or after connecting or establishing the connection to a selected accessory device at 740, the host device may disconnect or deprioritize any existing connections to the extent they exist.

The method 700, as shown in FIG. 7, may be repeated, e.g., for one or more iterations. However, to avoid unintentional switching of connections, the method 700 may include determining that the selected accessory device or connection is currently idle after establishing the selected connection to the selected host device. For example, suppose the accessory is no longer streaming content from the host device or is no longer being worn for a predefined period of time. In that case, the method may proceed to performing:

detecting a presence of a second plurality of accessory devices are configured to receive or obtain streaming content/media and are each available for establishing a connection;
determining a second prioritized order of connections to the second plurality of accessory devices; selecting a second host device from the second plurality of accessory devices based on the second prioritized order of connections; and connecting the host device to the second selected accessory device.

However, suppose there is still content streaming to the accessory device. In that case, the pairing or connection between the accessory device and host device should be maintained or honored despite other connections possibly having higher prioritized connections in a manner previously determined, e.g., other devices are now closer because of movement by the accessory device away from the host. Similarly, suppose a certain application is running and/or streaming content. In that case, the connection should be maintained, such as video or audio calls occurring with the paired or connected accessory device and hosting device. In other cases, certain applications may be of lower priority and may allow the switching to a new connection, as described in examples herein.

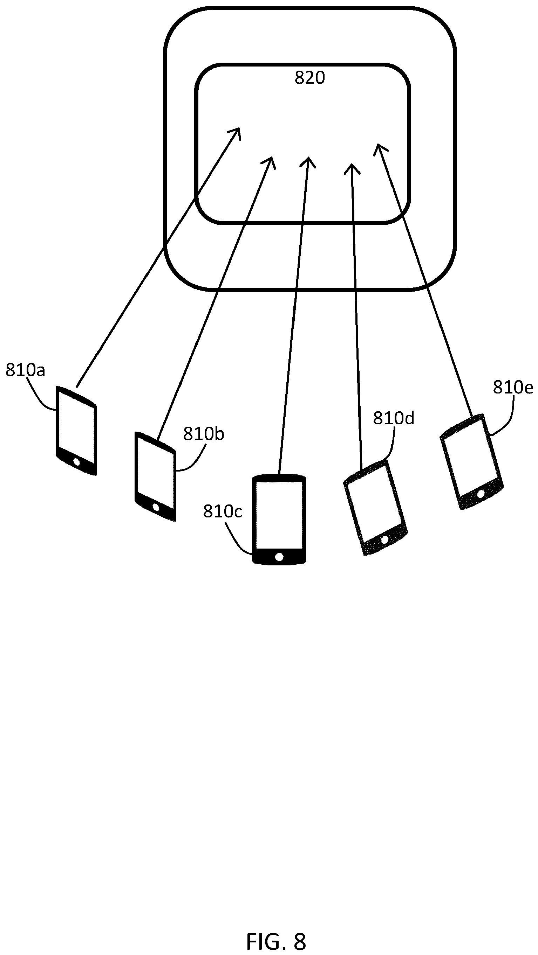

FIG. 8 shows an environment diagram 800, including a plurality of user devices 810a-810e. The devices may have wireless communication capabilities and include components such as those described in connection with the device 100 of FIG. 2. Those devices may include cameras and microphones for capturing media content. The user devices may be, for example, smartphones, tablets, media players, cameras, and the like, to name a few.

The user devices 810a-810e may be directed toward a general area 820, though not necessarily focused on the same spot or section, to capture an image. In general, photos taken by individual user devices are subjected to various amounts of shake, viewing angles, obstructions, brightness, and movement of the objects, etc. For example, in a crowded gathering, every user device faces these challenges and there is no synergy amongst all the devices to get the best possible shot.

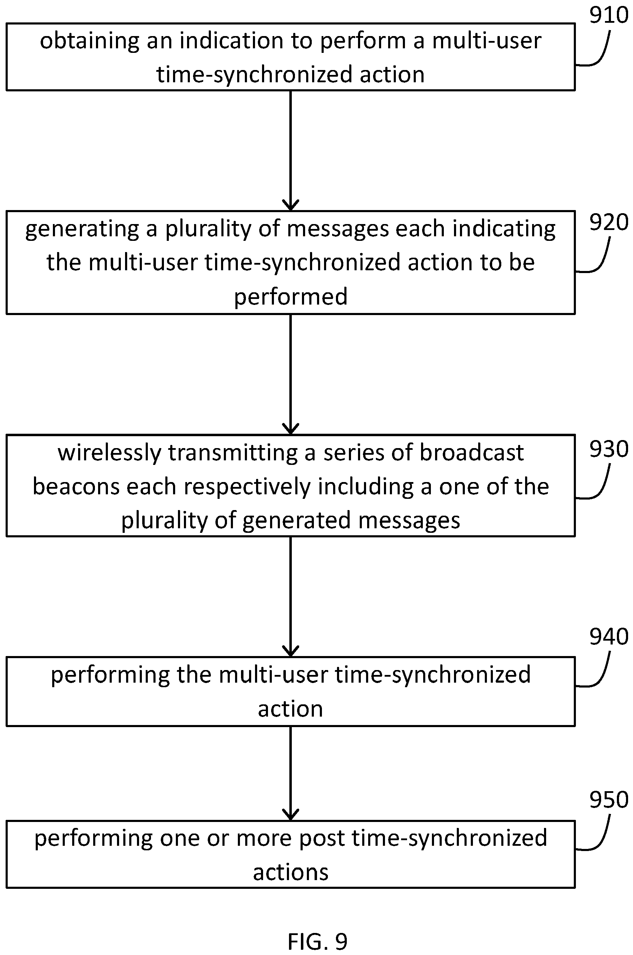

Accordingly, method 900 in FIG. 9 shows a multi-user synchronizing action method. The method 900 can be performed by a wireless user device which can be any device described herein, such as, e.g., device 100 of FIG. 1. The method 900 may be performed by the user or wireless device initiating or originating the multi-synchronized action. The method may be implemented by an application or software executing on the wireless user device. One or more processors of a device may execute instructions stored on a non-transitory computer-readable medium to perform the method 900.

In one example, the method 900 can cause synchronization image capturing by different wireless users or their electronic/wireless devices. The devices and users may target a common area. The synchronization, e.g., of imaging or image capturing, may be accomplished using wireless beacons, including, for example, Bluetooth (BT) Broadcast Beacons.

Further, the devices participating in the multi-device or multi-user synchronization may be part of a virtual network. These user devices in the virtual network may collaborate in a general vicinity to gather and enhance the photos, videos, audio, etc., captured in a time-synchronized manner. In short, the method 900 can be implemented to realize time synchronization across multiple devices and share application-specific data across the devices using wireless technology, such as Bluetooth technology.

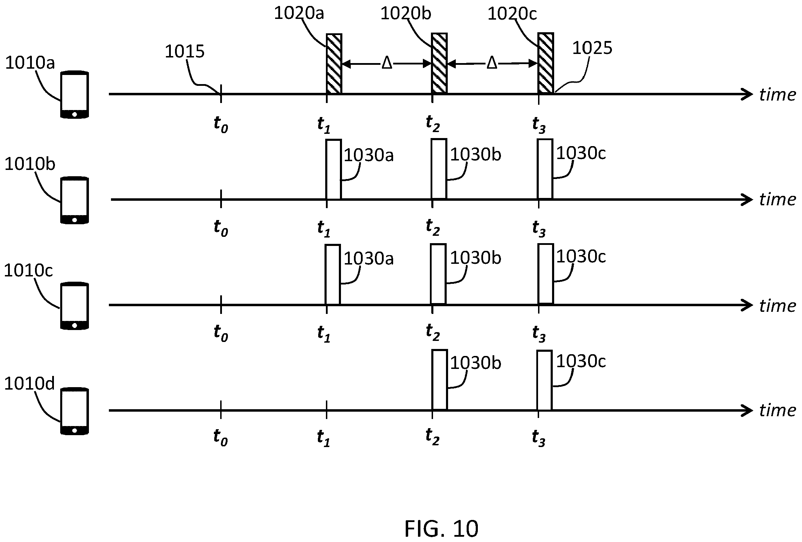

FIG. 10 shows time diagrams 1000 representing an example of the performance of the method 900. In the example of FIG. 10, the device 1010a may be the originating device that performs the method 900, and the devices 1010b-1010d can be participating devices. The devices 1010a-d may have already joined a network, e.g., a virtual network and/or an ad hoc wireless network.

Referring to FIG. 9, the method 900 includes, at 910, obtaining an indication to perform a multi-user synchronized action. For example, the device 1010a of FIG. 10 may obtain the indication to perform the multi-user synchronized action at $t_0$. In one example, the indication to perform the multi-user synchronized action may be the device determining an initiation action for the multi-user synchronized action. The initiation action may be a request to image capture, audio capture, and/or video capture. For example, a user may input a request to perform a media image capture, e.g., press a button or input a command (e.g., through a key or touchscreen). This initiation action may occur when a software application executes on the device 1010a. A media capture may capture or recording of audio, image, video, or combinations thereof, (e.g., audio only, audio and video only, image and audio, etc.)

At 920, the method 900 generates a plurality of messages, each message indicating the multi-user synchronized action to be performed. At 930, it includes wireless transmitting a series of broadcast beacons with each broadcast beacon including one of the plurality of generated messages. Referring again to FIG. 10, the device 1010a generates a message and transmits the message with the beacons 1020a, 1020b, and 1020c. The beacons, including the messages, can be transmitted at predefined intervals, e.g., $t_1$, $t_2$, $t_3$, etc. In one or more examples, the predefined intervals may be equally spaced apart by a predefined spacing or time period $\Delta$. The beacons with the messages can be transmitted to devices part of a virtual network. In FIG. 10, the devices 1010a-d may be part of the virtual network and can be configured to or capable of receiving the beacons.

The broadcast beacons transmitted include messages which contain information regarding the performance of the multi-user synchronization action. For example, each transmitted message can indicate what and when the multi-user synchronization action is to occur. Each transmitted message can indicate the particular action and the scheduled time for devices participating in the multi-user synchronization action. A message can indicate that a time when the last or terminal of the series of broadcast beacons is transmitted is for when the multi-user synchronized action is to be performed. A message may indicate this scheduled time in terms of intervals offset from the transmission of the message.

Referring to the example of FIG. 10, if the scheduled time for the performance of the multi-user synchronization action is to occur during or transmission of the third broadcast beacon 1020c (time $t_3$), the messages sent with the first beacon 1020a, the second 1020b and third beacon 1020c may each indicate this time. The messages may indicate the scheduled time for performance, in any suitable manner. In one example, each message may indicate the scheduled time in terms of offset beacons or intervals from the transmission of the message (or transmission of the respective beacon including the message) and the terminal message/beacon.

For example, in FIG. 10, the message included with the first beacon 1020a, may indicate an offset of two beacon intervals (two $\Delta$s) between the transmission of the beacon 1020a and the performance of the synchronization action (which corresponds to transmission of the last or third beacon 1020). The offsets thus indicate when in the future, the performance of the synchronized action is to occur. Similarly, the message transmitted with the second beacon 1020b may indicate an offset of 1 beacon or 1 interval (one $\Delta$). The transmission of the third beacon may include a message that indicates the synchronization action is to occur and be performed with its transmission.

Further, the message may indicate the spacing or size of the intervals $\Delta$. This interval size $\Delta$ may be expressed in a quantity of time.

In addition, the messages transmitted include information for the performance of the multi-user action. The messages may include one or more parameters for performing the multi-user time-synchronized action. These parameters are for the devices receiving the broadcast beacons, which will participate and perform the multi-user time-synchronized action. These parameters can depend on the type of multi-user action to be performed. In addition, the parameters may also be application-specific parameters. For example, applications may be used to perform methods described herein (e.g., method 900). That is an originating device and other participating devices may each execute an application for executing a time-synchronized multi-user action.

For example, in one or more instances, the multi-user synchronized action may be done through applications on user devices, e.g., devices 1010a-d in FIG. 10. An application may be responsible for sending messages (e.g., from an originating device) and an application may be responsible for obtaining and interpreting broadcast beacon messages sent from the originating device. The messages sent in the broadcast beacons may be include application specific parameters. Further, the application on participating devices may automatically perform the multi-user action according to the information in the broadcast beacons, e.g., automatically execute the action in a time-synchronized manner (e.g., at the terminal broadcast beacon). In other instances, the application may inform or indicate to the user when to manually perform the multi-user action (e.g., media capture) in a time synchronized manner according to the messages received in the broadcast beacons.

Some examples of application specific parameters may include, but is not limited to: Target object details (e.g., text/coordinates/direction pointer, etc.), Commands to the application (like single shot mode/burst mode / Imaging parameter settings (ISO, HDR, etc.), post-capture actions, like the destination address for image export, applying a unique name tag prefix for all the images captured, compression commands, etc. Virtual Network ID and parameters for logging Source Identifier (i.e., details about 1010a) for any further references to be used by participating devices.

In the case where multi-user action includes capturing an image, the parameters may indicate image capture settings. These parameters may include things such as exposure settings, zoom settings, shutter speed, aperture settings, ISO settings, HDR mode, image size, and light balance, to name a few. Similar settings or parameters may be indicated or included for capturing video content, e.g., frames per second, video resolution, bitrate, white balance, etc. Similarly, settings may be provided for recording or capturing audio (e.g., the sample rate).

At 940, the method 900 includes performing the multi-user time synchronized action. The device performing the method 900 is configured to perform the action time-synchronized with the scheduled time. Referring back to FIG. 10, the device 1010a performs the multi-user time synchronized action at $t3$ or at or during transmission of the third or terminal transmitted broadcast beacon 1020c.

At 950, the method 900 includes performing one or more post-time-synchronized actions. In the case of media capture (e.g., audio, image, and/or video capture), the captured media may be transferred or transmitted to another device or network for further processing. Further, at 950, the processed media content may be obtained, e.g., from the device or network to which the capture media was previously sent.

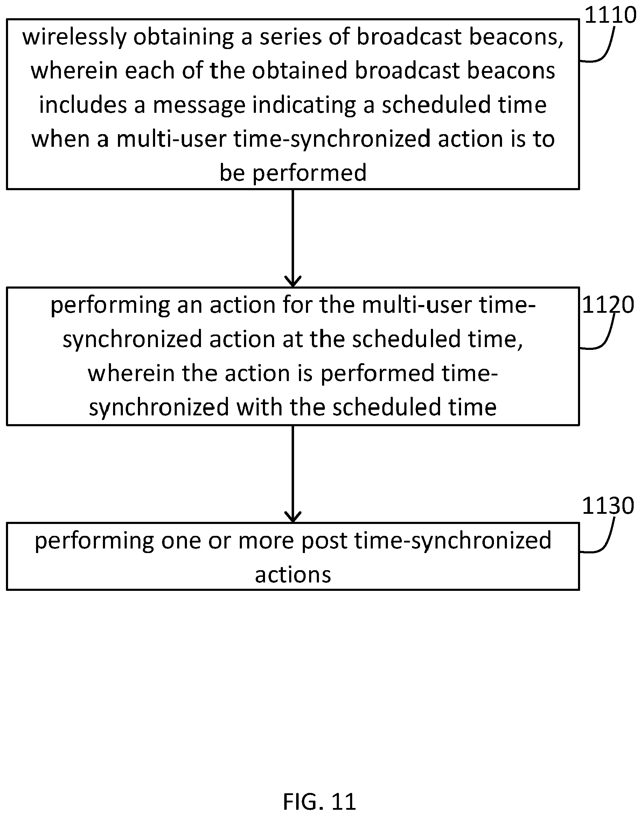

While the method 900 applies an originating, e.g., device 1010a in the context of FIG. 10, the method 1100 of FIG. 11 applies to other devices, e.g. participating devices that do not initiate or originate the multi-user action. In the context of FIG. 10, these devices may be devices 1010b-1010c. The devices performing the method 1100 may have joined a virtual network or an ad-hoc wireless network. The method 1100 may also be implemented by an application or software executing on the wireless user devices. One or more processors of the device may execute instructions stored on a non-transitory computer-readable medium to perform the method 1100.

The method 1100 includes at 1110, wirelessly obtaining a series of broadcast beacons, wherein each of the obtained broadcast beacons includes a message indicating a scheduled time when a multi-user time-synchronized action is to be performed. As previously described, the messages indicate what action (e.g., image capture, audio capture, video capture, etc.) is to be performed and when the action is to be performed in a time-synchronized manner with other participating devices. Referring back to FIG. 10, the devices 1010b-d may receive a series of broadcast beacons from device 1010a. Specifically, the devices 1010b and 1010c may respectively receive broadcast beacons 1030a-1030c at times $t_1$, $t_2$, and $t_3$. Device 1010d may only receive the later broadcast beacons 1030b and 1030c.

As described above in connection with the method 900, the messages can indicate when the performance of the multi-user synchronization action is to occur. Further, as described above in connection with the method 900, the messages can also indicate or provide one or more parameters for performing the multi-user time-synchronized action.

The method 1100 includes, at 1120, performing an action for the multi-user time-synchronized action at the scheduled time, wherein the action is performed time-synchronized with the scheduled time. The devices performing the action can perform the action in a time-synchronized manner with the last or terminal broadcast and according to the parameters indicated in the messages included with the broadcast beacons. For example, in the context of FIG. 11, the devices 1110b-d can be configured to, at $t3$ or upon reception of the indicated beacon 1020c, to perform an action.

The method 1100 includes, at 1130, performing one or more post time-synchronized actions. Again, in the case of media captured (e.g., audio, image, and/or video capture), the captured media may be transferred or transmitted to another device or network for processing. Further, at 1130, processed media content may be obtained, e.g., from the device or network to which the capture media was sent.

In connection with the method 900 and method 1100, processed media content received may be media content that has been processed based on all the media simultaneously captured. Referring to FIG. 10, the media or content captured at $t3$ by devices 1010a-d can be uploaded to another device or network that processes.

Processed or enhanced media content can be generated from all the uploaded content. The devices may each obtain enhanced media content produced by a combination of multiple media captures. In one example, the media captured can be images or photos, and the generated enhanced media content can be a composite image formed by the multiple images captured from the participating devices, e.g., a composite fused or photo-stitched image. Similarly, enhanced media content can be produced in audio and video formats. Audio content can be produced, e.g., enhanced audio content can be audio of enhanced or improved sound quality, or some include a composite audio mashup from audio captures. Enhanced video content can be generated based on all captured videos. The result may be one or more videos with enhanced quality and/or may include some video mashup from all the captured video captures

In the following, various aspects of the present disclosure will be illustrated:

Example 1 is a wireless device including one or more processors coupled to an interface of a wireless circuit, the one or more processors configured to: obtain an indication to perform a multi-user time-synchronized action; generate a plurality of messages each indicating the multi-user time-synchronized action to be performed; and wirelessly transmit a series of broadcast beacons each respectively including a one of the plurality of generated messages.

Example 2 is the subject matter of Example 1, wherein to wirelessly transmit the series of broadcast beacons may include to respectively transmit the series of broadcast beacons at a plurality of predefined intervals.

Example 3 is the subject matter of Example 2, wherein each of the plurality of messages may include a scheduled time indicating when the multi-user time-synchronized action is to be performed.

Example 4 is the subject matter of Example 3, wherein at least one of the plurality of messages indicates a timing or spacing between the plurality of predefined intervals.

Example 5 is the subject matter of Example 3 or 4, wherein the scheduled time may indicate the multi-user time-synchronized action is to be performed at a terminally transmitted broadcast beacon of the series broadcast beacons.

Example 6 is the subject matter of Example 5, wherein each scheduled time of the plurality of messages may indicate a number of intervals between transmission of the respective broadcast beacon including the message and the terminally transmitted broadcast beacon.

Example 7 is the subject matter of Example 6, wherein at least one of the plurality of messages indicates one or more parameters for performing the multi-user synchronized action.

Example 8 is the subject matter of Example 7, wherein to wirelessly transmit the series of broadcast beacons may include to wirelessly transmit the series of broadcast beacons to a plurality of user devices.

Example 9 is the subject matter of Example 8, wherein the one or more processors may be further configured to form a network including the plurality of user devices.

Example 10 is the subject matter of Example 9, wherein the one or more processors may be further configured to perform an action for the multi-user time-synchronized action wherein the action is performed time-synchronized with the transmission of the terminally transmitted broadcast beacon.

Example 11 is the subject matter of Example 10, wherein the one or more processors may be further configured to determine an indication to perform the multi-user time-synchronized action.

Example 12 is the subject matter of Example 11, wherein to determine the indication to perform the multi-user time-synchronized action may include to determine an initiation action for the multi-user time-synchronized action has occurred.

Example 13 is the subject matter of Example 12, wherein the initiation action for the multi-user time-synchronized action may be a media capture initiation action.

Example 14 is the subject matter of Example 13, wherein to perform the action for the multi-user time-synchronized action may include to capture media synchronized with the transmission of the terminally transmitted broadcast beacon, and to transfer the captured media to another device or network.

Example 15 is the subject matter of Example 14, wherein the one or more parameters for performing the multi-user synchronized may include one or more media capture settings or application specific settings.

Example 16 is the subject matter of Example 14 or 15, wherein the one or more processors may be further configured to obtain an enhanced media content formed from media captured by one or more of the wireless device and the plurality of user devices.

Example 17 is the subject matter of Example 16, wherein the media capture may be an image capture and the enhanced media content is formed by a plurality of images capture from the wireless device and the plurality of user devices.

Example 18 is the subject matter of any of claims 1 to 17, wherein the wireless transmission of the series of broadcast beacons may be performed using a Bluetooth protocol and wherein the broadcast beacons are Bluetooth broadcast beacons.

Example 1A is a non-transitory computer readable medium including instructions that when executed by processing circuitry of a wireless device causes the processing circuitry to: obtain an indication to perform a multi-user time-synchronized action; generate a plurality of messages each indicating the multi-user time-synchronized action to be performed; and wirelessly transmit a series of broadcast beacons each respectively including a one of the plurality of generated messages.

Example 2A is the subject matter of Example 1A, wherein to wirelessly transmit the series of broadcast beacons may include to respectively transmit the series of broadcast beacons at a plurality of predefined intervals.

Example 3A is the subject matter of Example 2A, wherein each of the plurality of messages may include a scheduled time indicating when the multi-user time-synchronized action is to be performed.

Example 4A is the subject matter of Example 3A, wherein at least one of the plurality of messages may indicate a timing or spacing between the plurality of predefined intervals.

Example 5A is the subject matter of Example 3A or 4A, wherein the scheduled time may indicate that the multi-user time-synchronized action is to be performed at a terminally transmitted broadcast beacon of the series broadcast beacons.

Example 6A is the subject matter of Example 5A, wherein each scheduled time of the plurality of messages may indicate a number of intervals between transmission of the respective broadcast beacon including the message and the terminally transmitted broadcast beacon.

Example 7A is the subject matter of Example 6A, wherein at least one of the plurality of messages may indicate one or more parameters for performing the multi-user synchronized action.

Example 8A is the subject matter of claim 7A, wherein to wirelessly transmit the series of broadcast beacons may include to wirelessly transmit the series of broadcast beacons to a plurality of user devices.

Example 9A is the subject matter of Example 8A, wherein the processing circuitry may be further caused to form a network including the plurality of user devices.

Example 10A is the subject matter of Example 9A, wherein the processing circuitry may be further caused to perform an action for the multi-user time-synchronized action wherein the action is performed time-synchronized with the transmission of the terminally transmitted broadcast beacon.

Example 11A is the subject matter of Example 10A, wherein the processing circuitry may be further caused to determine an indication to perform the multi-user time-synchronized action.

Example 12A is the subject matter of Example 11A, wherein to determine the indication to perform the multi-user time-synchronized action may include to determine an initiation action for the multi-user time-synchronized action has occurred.

Example 13A of Example 12A, wherein the initiation action for the multi-user time-synchronized action may be a media capture initiation action.

Example 14A is the subject matter of Example 13A, wherein to perform the action for the multi-user time-synchronized action may include to capture media synchronized with the transmission of the terminally transmitted broadcast beacon, and to transfer the captured image to another device or network.

Example 15A is the subject matter of Example 14A, wherein the one or more parameters for performing the multi-user synchronized may include one or more media capture settings or application specific settings.

Example 16A is the subject matter of Example 14A or 15A, wherein the processing circuitry may be further caused to obtain an enhanced media content formed from media captured by one or more of the wireless device and the plurality of user devices.

Example 17A is the subject matter of Example 16A, wherein the media capture may be an image capture and the enhanced media content is formed by a plurality of images capture from the wireless device and the plurality of user devices.

Example 18A is the subject matter of any of Examples 1A to 17A, wherein the wireless transmission of the series of broadcast beacons is performed using a Bluetooth protocol and wherein the broadcast beacons are Bluetooth broadcast beacons.

Example 1B is a method to be implemented by a wireless user device, the method including: obtaining an indication to perform a multi-user time-synchronized action; generating a plurality of messages each indicating the multi-user time-synchronized action to be performed; and wirelessly transmitting a series of broadcast beacons each respectively including a one of the plurality of generated messages.

Example 2B is the subject matter of Example 1B, wherein wirelessly transmitting the series of broadcast beacons may include respectively transmitting the series of broadcast beacons at a plurality of predefined intervals.

Example 3B is the subject matter of Example 2B, wherein each of the plurality of messages may include a scheduled time indicating when the multi-user time-synchronized action is to be performed.

Example 4B is the subject matter of Example 3B, wherein at least one of the plurality of messages may indicate a timing or spacing between the plurality of predefined intervals.

Example 5B is the subject matter of Example 3B or 4B, wherein the scheduled time may indicate that the multi-user time-synchronized action is to be performed at a terminally transmitted broadcast beacon of the series broadcast beacons.

Example 6B is the subject matter of Example 5B, wherein each scheduled time of the plurality of messages may indicate a number of intervals between transmission of the respective broadcast beacon including the message and the terminally transmitted broadcast beacon.

Example 7B is the subject matter of Example 6B, wherein at least one of the plurality of messages may indicate one or more parameters for performing the multi-user synchronized action.

Example 8B is the subject matter of Example 7B, wherein wirelessly transmitting the series of broadcast beacons may include wirelessly transmitting the series of broadcast beacons to a plurality of user devices.

Example 9B is the subject matter of Example 8B, which may further include forming a network including the plurality of user devices.

Example 10B is the subject matter of Example 9B, which may further include performing an action for the multi-user time-synchronized action wherein the action is performed time-synchronized with the transmission of the terminally transmitted broadcast beacon.

Example 11B is the subject matter of Example 10B, which may further include determining an indication to perform the multi-user time-synchronized action.

Example 12B is the subject matter of Example 11B, wherein determining the indication to perform the multi-user time-synchronized action may include determining an initiation action for the multi-user time-synchronized action has occurred.

Example 13B is the subject matter of Example 12B, wherein the initiation action for the multi-user time-synchronized action may be a media capture initiation action.

Example 14B is the subject matter of Example 13B, wherein performing the action for the multi-user time-synchronized action may include capturing media synchronized with the transmission of the terminally transmitted broadcast beacon, and transferring the captured image to another device or network.

Example 15B is the subject matter of Example 14B, wherein the one or more parameters for performing the multi-user synchronized may include one or more media capture settings or application specific settings.

Example 16B is the subject matter of Example 14B or 15B, which may further include obtaining an enhanced media content formed from media captured by one or more of the wireless device and the plurality of user devices.

Example 17B is the subject matter of Example 16B, wherein the media capture may be an image capture and the enhanced media content is formed by a plurality of images capture from the wireless device and the plurality of user devices.

Example 18B is the subject matter of any of Examples 1B to 17B, wherein the wireless transmission of the series of broadcast beacons may be performed using a Bluetooth protocol and wherein the broadcast beacons are Bluetooth broadcast beacons.

Example 1C is a wireless user device including means for obtaining an indication to perform a multi-user time-synchronized action; means for generating a plurality of messages each indicating the multi-user time-synchronized action to be performed; and means for wirelessly transmitting a series of broadcast beacons each respectively including a one of the plurality of generated messages.

Example 2C is the subject matter of Example 1C, wherein the means for wirelessly transmitting the series of broadcast beacons may include means for respectively transmitting the series of broadcast beacons at a plurality of predefined intervals.

Example 3C is the subject matter of Example 2C, wherein each of the plurality of messages may include a scheduled time indicating when the multi-user time-synchronized action is to be performed.

Example 4C is the subject matter of Example 3C, wherein at least one of the plurality of messages may indicate a timing or spacing between the plurality of predefined intervals.

Example 5C is the subject matter of Example 3C or 4C, wherein the scheduled time may indicate that the multi-user time-synchronized action is to be performed at a terminally transmitted broadcast beacon of the series broadcast beacons.

Example 6C is the subject matter of Example 5C, wherein each scheduled time of the plurality of messages may indicate a number of intervals between transmission of the respective broadcast beacon including the message and the terminally transmitted broadcast beacon.

Example 7C is the subject matter of Example 6C, wherein at least one of the plurality of messages may indicate one or more parameters for performing the multi-user synchronized action.

Example 8C is the subject matter of Example 7C, wherein the means for wirelessly transmitting the series of broadcast beacons may include means for wirelessly transmitting the series of broadcast beacons to a plurality of user devices.

Example 9C is the subject matter of Example 8C, which may further include means for forming a network including the plurality of user devices.

Example 10C is the subject matter of Example 9C, which may further include means for performing an action for the multi-user time-synchronized action wherein the action is performed time-synchronized with the transmission of the terminally transmitted broadcast beacon.

Example 11C is the subject matter of Example 10C, which may further include means for determining an indication to perform the multi-user time-synchronized action.

Example 12C is the subject matter of Example 11C, wherein the means for determining the indication to perform the multi-user time-synchronized action may include determining an initiation action for the multi-user time-synchronized action has occurred.

Example 13C is the subject matter of Example 12C, wherein the initiation action for the multi-user time-synchronized action may be a media capture initiation action.

Example 14C is the subject matter of Example 13C, wherein the means for performing the action for the multi-user time-synchronized action may include means for capturing media synchronized with the transmission of the terminally transmitted broadcast beacon, and means for transferring the captured image to another device or network.

Example 15C is the subject matter of Example 14C, wherein the one or more parameters for performing the multi-user synchronized may include one or more media capture settings or application specific settings.

Example 16C is the subject matter of Example 14C or 15C, which may further include means for obtaining an enhanced media content formed from media captured by one or more of the wireless device and the plurality of user devices.

Example 17C is the subject matter of Example 16C, wherein the media capture may be an image capture and the enhanced media content is formed by a plurality of images capture from the wireless device and the plurality of user devices.

Example 18C is the subject matter of any of Examples 1C to 17C, wherein the wireless transmission of the series of broadcast beacons may be performed using a Bluetooth protocol and wherein the broadcast beacons are Bluetooth broadcast beacons.

Example 1D is a wireless device including one or more processors coupled to an interface of a wireless circuitry, the one or more processors configured to wirelessly obtain a series of broadcast beacons, wherein each of the obtained broadcast beacons includes a message indicating a scheduled time when a multi-user time-synchronized action is to be performed; and perform an action for the multi-user time-synchronized action at the scheduled time.

Example 2D is the subject matter of Example 1D, wherein to obtain the series of broadcast beacons may include to obtain the series of broadcast beacons respectively at predefined intervals.

Example 3D is the subject matter of Example 2D, wherein each message included with the obtained series of broadcast beacons may indicate a timing or spacing between the predefined intervals.

Example 4D is the subject matter of Example 2D or 3D, wherein the predefined intervals may be spaced evenly apart.

Example 5D is the subject matter of any of Examples 1 to 4, wherein each scheduled time may indicate the multi-user time-synchronized action is to be performed at a terminally transmitted broadcast beacon of the series broadcast beacons.

Example 6D is the subject matter of Example 5D, wherein the scheduled time of each message may indicate a number of intervals between transmission of the respective broadcast beacon including the message with the scheduled time and the terminally transmitted broadcast beacon.

Example 7D is the subject matter of Example 6D, wherein at least one of the messages included with the obtained series of broadcast beacons may indicate one or more parameters for performing the multi-user time-synchronized action.

Example 8D is the subject matter of any of Examples 1D to 7D, wherein the one or more processors may be further configured to, prior to obtaining the series of broadcast beacons, to join a network including a device transmitting the series of broadcast beacons.

Example 9D is the subject matter of any of Examples 5D to 8D, wherein to perform the action for multi-user time-synchronized action may include to perform the action synchronized with the terminally transmitted broadcast beacon of the series of broadcast beacons.

Example 10D is the subject matter of Example 7D, wherein to perform the action for the multi-user time-synchronized action may include to capture a media synchronized with the terminally transmitted broadcast beacon, and transfer the captured media to another device or network.

Example 11D is the subject matter of any of Examples 1D to 10D, wherein the wireless transmission of the series of broadcast beacons is performed using a Bluetooth protocol and wherein the broadcast beacons are Bluetooth broadcast beacons.

Example 1E is a non-transitory computer readable medium including instructions that when executed by processing circuitry of a wireless device causes the processing circuitry to wirelessly obtain a series of broadcast beacons, wherein each of the obtained broadcast beacons includes a message indicating a scheduled time when a multi-user time-synchronized action is to be performed; and perform an action for the multi-user time-synchronized action at the scheduled time.

Example 2E is the subject matter of Example 1E, wherein to obtain the series of broadcast beacons may include obtaining the series of broadcast beacons respectively at predefined intervals.

Example 3E is the subject matter of Example 2D, wherein each message included with the obtained series of broadcast beacons may indicate a timing or spacing between the predefined intervals.

Example 4E is the subject matter of Example 2E or 3E, wherein the predefined intervals may be spaced evenly apart.

Example 5E is the subject matter of any of Examples 1E to 4E, wherein each scheduled time may indicate the multi-user time-synchronized action is to be performed at a terminally transmitted broadcast beacon of the series broadcast beacons.

Example 6E is the subject matter of Example 5E, wherein the scheduled time of each message may indicate a number of intervals between transmission of the respective broadcast beacon including the message with the scheduled time and the terminally transmitted broadcast beacon.

Example 7E is the subject matter of Example 6E, wherein at least one of the messages included with the obtained series of broadcast beacons may indicate one or more parameters for performing the multi-user time-synchronized action.

Example 8E is the subject matter of any of Examples 1E to 7E, wherein the processing circuitry may be further caused to, prior to obtaining the series of broadcast beacons, to join a network including a devices transmitting the series of broadcast beacons.

Example 9E is the subject matter of any of Examples 5E to 8E, wherein to perform the action for multi-user time-synchronized action may include to perform the action synchronized with the terminally transmitted broadcast beacon of the series of broadcast beacons.

Example 10E is the subject matter of Example 7E, wherein to perform the action for the multi-user time-synchronized action may include to capture a media synchronized with the terminally transmitted broadcast beacon, and transfer the captured media to another device or network.

Example 11E is the subject matter of any of Examples 1E to 10E, wherein the wireless transmission of the series of broadcast beacons may be performed using a Bluetooth protocol and wherein the broadcast beacons are Bluetooth broadcast beacons.

Example 1F is a method for a wireless device including: wirelessly obtaining a series of broadcast beacons, wherein each of the obtained broadcast beacons includes a message indicating a scheduled time when a multi-user time-synchronized action is to be performed; and performing an action for the multi-user time-synchronized action at the scheduled time.

Example 2F is the subject matter of Example 1F, wherein obtaining the series of broadcast beacons may include obtaining the series of broadcast beacons respectively at predefined intervals.

Example 3F is the subject matter of Example 2F, wherein each message included with the obtained series of broadcast beacons may indicate a timing or spacing between the predefined intervals.

Example 4F is the subject matter of Example 2F or 3F, wherein the predefined intervals may be spaced evenly apart.

Example 5F is the subject matter of any of Examples 1F to 4F, wherein each scheduled time may indicate the multi-user time-synchronized action is to be performed at a terminally transmitted broadcast beacon of the series broadcast beacons.

Example 6F is the subject matter of Example 5F, wherein the scheduled time of each message may indicate a number of intervals between transmission of the respective broadcast beacon including the message with the scheduled time and the terminally transmitted broadcast beacon.

Example 7F is the subject matter of Example 6F, wherein at least one of the messages included with the obtained series of broadcast beacons may indicate one or more parameters for performing the multi-user time-synchronized action.

Example 8F is the subject matter of any of Examples 1F to 7F, which may further include, prior to obtaining the series of broadcast beacons, joining a network including a devices transmitting the series of broadcast beacons.

Example 9F is the subject matter of any of Examples 5F to 8F, wherein performing the action for multi-user time-synchronized action may include performing the action synchronized with the terminally transmitted broadcast beacon of the series of broadcast beacons.

Example 10F is the subject matter of Example 7F, wherein performing the action for the multi-user time-synchronized action may include capturing a media synchronized with the terminally transmitted broadcast beacon, and transferring the captured media to another device or network.

Example 11F is the subject matter of any of Examples 1F to 10F, wherein the wireless transmission of the series of broadcast beacons may be performed using a Bluetooth protocol and wherein the broadcast beacons are Bluetooth broadcast beacons.

Example 1G is a wireless user device including: means for wirelessly obtaining a series of broadcast beacons, wherein each of the obtained broadcast beacons includes a message indicating a scheduled time when a multi-user time-synchronized action is to be performed; and means for performing an action for the multi-user time-synchronized action at the scheduled time.

Example 2G is the subject matter of Example 1G, wherein the means for obtaining the series of broadcast beacons includes means for obtaining the series of broadcast beacons respectively at predefined intervals.

Example 3G is the subject matter of Example 2G, wherein each message included with the obtained series of broadcast beacons may indicate a timing or spacing between the predefined intervals.

Example 4G is the subject matter of Example 2G or 3G, wherein the predefined intervals may be spaced evenly apart.

Example 5G is the subject matter of any of Examples 1G to 4G, wherein each scheduled time may indicate the multi-user time-synchronized action is to be performed at a terminally transmitted broadcast beacon of the series broadcast beacons.

Example 6G is the subject matter of Example 5G, wherein the scheduled time of each message may indicate a number of intervals between transmission of the respective broadcast beacon including the message with the scheduled time and the terminally transmitted broadcast beacon.

Example 7G is the subject matter of Example 6G, wherein at least one of the messages included with the obtained series of broadcast beacons may indicate one or more parameters for performing the multi-user time-synchronized action.

Example 8G is the subject matter of any of Examples 1G to 7G, which may further include means for joining a network including a devices transmitting the series of broadcast beacons prior to obtaining the series of broadcast beacons.

Example 9G is the subject matter of any of Examples 5G to 8G, wherein the means for performing the action for multi-user time-synchronized action may include means for performing the action synchronized with the terminally transmitted broadcast beacon of the series of broadcast beacons.

Example 10G is the subject matter of Example 7G, wherein the means performing the action for the multi-user time-synchronized action may include means for capturing a media synchronized with the terminally transmitted broadcast beacon, and means for transferring the captured media to another device or network.

Example 11G is the subject matter of any of Examples 1G to 10G, wherein the wireless transmission of the series of broadcast beacons may be performed using a Bluetooth protocol and wherein the broadcast beacons are Bluetooth broadcast beacons.

Example 1H is a wireless device including one or more processors coupled to an interface of a wireless circuit, the one or more processors configured to: detect a plurality of streaming devices; determine a proximity distance to each of the plurality of streaming devices; select for connection a device from the plurality of streaming devices based on at least the determined proximities; and connect to the selected device.

Example 2H is the subject matter of Example 1H, wherein to select to a device may include to select a device with a closest proximity distance of the plurality of proximity distances.

Example 3H is the subject matter of Example 1H or 2H, wherein the selected device may be a first streaming device, and wherein to connect to the first streaming device includes to maintain a current connection to the first streaming device.

Example 4H is the subject matter of Example 2H, wherein to connect to the selected device may include to switch a connection from a first streaming device to the selected device, the selected device being other than the first streaming device.

Example 5H is the subject matter of Example 4H, wherein to connect to the selected device may further include to disconnect the connection to the first streaming device.

Example 6H is the subject matter of any of Examples 1H to 5H, wherein the processing circuitry may be further configured to determine a presence duration for each of the detected plurality of streaming devices, wherein the presence duration indicates an amount of time the device available for connection to the electronic device, wherein to selecting a device from the plurality of streaming devices to connect based on at least the determined proximities may include to select a device from a subset of the plurality of streaming devices based on at least the determined proximities, and wherein each device of the subset of the plurality of streaming devices has a presence duration greater than a predefined threshold.

Example 7H is the subject matter of any of Examples 1H to 6H, wherein the processing circuitry may be further configured to obtain a connection profile, wherein the connection profile indicates a priority for devices for connection, and wherein to select a device from the plurality of streaming devices includes to select a device based on the priority indicated in the connection profile and based on the determined proximities to the electronic device.

Example 8H is the subject matter of any of Examples 1H to 7H, wherein the processing circuitry may be further configured to determine a device type for each device, and wherein to select a device from the plurality of streaming devices includes to select a device based on the determined proximities to the electronic device and the determined device types.

Example 9H is the subject matter of any of Examples 1H to 8H, wherein to connect to the selected device may include to connect to the selected device automatically without any user input.

Example 10H is the subject matter of any of Examples 1H to 8H, wherein to connect to the selected device may include to obtain a user input indicating a confirmation to connect to the select device, and connect, after obtaining the user input, to the selected device.

Example 11H is the subject matter of any of Examples 1H to 10H, wherein to determine the proximity distance to each of the plurality of streaming devices may include to determine the proximity distance based on distance measurement using a received signal strength indicator (RSSI) value determined for each of the plurality of devices using transmit power independent scaling method.

Example 12H is the subject matter of any of Examples 1H to 11, wherein to determine the proximity distance to each of the plurality of streaming devices may include performing an ultra-wideband (UWB) distance measurement for each of the plurality of devices

Example 13H is the subject matter of any of Examples 1H to 12H, wherein the processing circuitry may be further configured to obtain streaming content from the selected device after connection to the selected device.

Example 14H is the subject matter of any of Examples 1H to 13H, wherein to connect to the selected device may include to connect to the selected device using Bluetooth technology.

Example 1I is a non-transitory computer readable medium having instructions that when executed by processing circuitry of a wireless device causes the processing circuitry to: detect a plurality of streaming devices; determine a proximity distance to each of the plurality of streaming devices; select for connection a device from the plurality of streaming devices based on at least the determined proximities; and connect to the selected device.

Example 2I is the subject matter of Example 1I, wherein to select to a device may include to select a device with a closest proximity distance of the plurality of proximity distances.

Example 3I is the subject matter of Example 1I or 2I, wherein the selected device is a first streaming device, and wherein to connect to the first streaming device may include to maintain a current connection to the first streaming device.

Example 4I is the subject matter of Example 2I, wherein to connect to the selected device may include to switch a connection from a first streaming device to the selected device, the selected device being other than the first streaming device.

Example 5I is the subject matter of Example 4I, wherein to connect to the selected device further may include to disconnect the connection to the first streaming device.

Example 6I is the subject matter of any of the Examples 1I to 5I, wherein the processing circuitry may be further caused to determine a presence duration for each of the detected plurality of streaming devices, wherein the presence duration indicates an amount of time the device available for connection to the electronic device, wherein to select a device from the plurality of streaming devices to connect based on at least the determined proximities comprises to select a device from a subset of the plurality of streaming devices based on at least the determined proximities, and wherein each device of the subset of the plurality of streaming devices has a presence duration greater than a predefined threshold.

Example 71 is the subject matter of any of Examples 1I to 61, wherein the processing circuitry may be further caused to obtain a connection profile, wherein the connection profile indicates a priority for devices for connection, and wherein to select a device from the plurality of streaming devices includes to select a device based on the priority indicated in the connection profile and based on the determined proximities to the electronic device.

Example 81 is the subject matter of any of Examples 1I to 71, wherein the processing circuitry may be further caused to determine a device type for each device, and wherein to select a device from the plurality of streaming devices comprises to select a device based on the determined proximities to the electronic device and the determined device types.

Example 91 is the subject matter of any of Examples 1I to 81, wherein to connect to the selected device may include to connect to the selected device automatically without any user input.

Example 101 is the subject matter of any of Examples 1I to 81, wherein to connect to the selected device may include to: obtain a user input indicating a confirmation to connect to the select device, and connect, after obtaining the user input, to the selected device.

Example 111 is the subject matter of any of Examples 1 to 10, wherein to determine the proximity distance to each of the plurality of streaming devices may include determining the proximity distance based on distance measurement using a received signal strength indicator (RSSI) value determined for each of the plurality of devices using transmit power independent scaling method.

Example 121 is the subject matter of any of Examples 1 to 11, wherein to determine the proximity distance to each of the plurality of streaming devices may include performing an ultra-wideband (UWB) distance measurement for each of the plurality of devices.

Example 131 is the subject matter of any of Examples 1 to 12, wherein the processing circuitry may be further caused to obtain streaming content from the selected device after connection to the selected device.

Example 141 is the subject matter of any of Examples 1 to 13, wherein to connect to the selected device may include to connect to the selected device using Bluetooth technology.

Example 1J is a method performed by an electronic device configured to communicate wireless, the method including: detecting a plurality of streaming devices; determining a proximity distance to each of the plurality of streaming devices; selecting for connection a device from the plurality of streaming devices based on at least the determined proximities; and connecting to the selected device.

Example 2J is the subject matter of Example 1J, wherein selecting a device may include selecting a device with a closest proximity distance of the plurality of proximity distances.

Example 3J is the subject matter of Example 1J, wherein, prior to selecting the device, the electronic device may have a connection to a first streaming device from the plurality of streaming devices.

Example 4J is the subject matter of Example 3J, wherein the selected device is the first streaming device, and wherein connecting to the first streaming device may include maintaining the connection to the first streaming device.

Example 5J is the subject matter of Example 3J or 4J, wherein the selected device may be a device other than the first streaming device, and wherein connecting to the selected device includes switching the connection from the first streaming device to the selected device.

Example 6J is the subject matter of Example 5J, wherein connecting to the selected device further may include disconnecting the connection to the first streaming device.

Example 7J is the subject matter of any of Examples 1J to 6J, which may further include determining a presence duration for each of the detected plurality of streaming devices; wherein the presence duration indicates an amount of time the device available for connection to the electronic device, wherein selecting a device from the plurality of streaming devices to connect based on at least the determined proximities includes selecting a device from a subset of the plurality of streaming devices based on at least the determined proximities, and wherein each device of the subset of the plurality of streaming devices has a presence duration greater than a predefined threshold.

Example 8J is the subject matter of any of Examples 1J to 7J, which may further include obtaining a connection profile, wherein the connection profile indicates a priority for connection to devices, and wherein selecting the device includes selecting a device based on the priority indicated in the connection profile and based on the determined proximities to the electronic device.

Example 9J is the subject matter of any of Examples 1J to 8J, which may further include determining a device type for each device, and wherein selecting the device includes selecting a device based on the determined proximities to the electronic device and the determined device types.

Example 10 is the subject matter of any of Examples 1J to 9J, wherein, connecting to the selected device may include connecting to the selected device automatically without any user input.

Example 1 1J is the subject matter of any of Examples 1J to 9J, wherein connecting to the selected device may include: obtaining a user input indicating a confirmation to connect to the select device, and connecting, after obtaining the user input, to the selected device.

Example 12J is the subject matter of any of Examples 1J to 11J, wherein determining the proximity distance to each of the plurality of streaming devices may include determining the proximity distance based on distance measurement using a received signal strength indicator (RSSI) value determined for each of the plurality of devices using transmit power independent scaling method.

Example 13J is the subject matter of any of Examples 1J to 1 1J, wherein determining the proximity distance to each of the plurality of streaming devices may include performing an ultra-wideband (UWB) distance measurement for each of the plurality of devices.

Example 14J is the subject matter of any of Examples 1J to 13J, which may further include obtaining streaming content from the selected device after connecting to the selected device.

Example 15J is the subject matter of any of Examples 1J to 14J, wherein connecting to the selected device may include connecting to the selected device using Bluetooth technology.

Example 1K is a wireless device including: means for detecting a plurality of streaming devices; means for determining a proximity distance to each of the plurality of streaming devices; means for selecting for connection a device from the plurality of streaming devices based on at least the determined proximities; and means for connecting to the selected device.

Example 2K is the subject matter of Example 1K, wherein the means for selecting a device may include means for selecting a device with a closest proximity distance of the plurality of proximity distances.

Example 3K is the subject matter of Example 1K or 2K, wherein the selected device may be a first streaming device, and wherein to connect to the first streaming device may include to maintain a current connection to the first streaming device.

Example 4K is the subject matter of Example 2K, wherein the means for connecting to the selected device may include the means for switching a connection from a first streaming device to the selected device, the selected device being other than the first streaming device.

Example 5K is the subject matter of Example 4K, wherein the means for connecting to the selected device may further include means for disconnecting the connection to the first streaming device.

Example 6K is the subject matter of any of Examples 1K to 5K, which may further include means for determining a presence duration for each of the detected plurality of streaming devices; wherein the presence duration indicates an amount of time the device available for connection to the electronic device, wherein the means for selecting a device from the plurality of streaming devices to connect based on at least the determined proximities includes means for selecting a device from a subset of the plurality of streaming devices based on at least the determined proximities, and wherein each device of the subset of the plurality of streaming devices has a presence duration greater than a predefined threshold.

Example 7K is the subject matter of any of Examples 1K to 6K, which may further include means for obtaining a connection profile, wherein the connection profile indicates a priority for devices for connection, and wherein the means for selecting a device from the plurality of streaming devices includes means for selecting a device based on the priority indicated in the connection profile and based on the determined proximities to the electronic device.

Example 8K is the subject matter of any of Examples 1K to 7K, which may further include means for determining a device type for each device, and wherein the means for selecting a device from the plurality of streaming devices includes means for selecting a device based on the determined proximities to the electronic device and the determined device types.

Example 9K is the subject matter of any of Examples 1K to 8K, wherein the means for connecting to the selected device may include means for connecting to the selected device automatically without any user input.

Example 10K is the subject matter of any of Examples 1K to 8K, wherein the means for connecting to the selected device may include means for obtaining a user input indicating a confirmation to connect to the select device, and means for connecting, after obtaining the user input, to the selected device.

Example 11K is the subject matter of any of Examples 1K to 10K, wherein the means for determining the proximity distance to each of the plurality of streaming devices may include means for determining the proximity distance based on distance measurement using a received signal strength indicator (RSSI) value determined for each of the plurality of devices using transmit power independent scaling method.

Example 12K is the subject matter of any of Examples 1K to 11K, wherein the means for determining the proximity distance to each of the plurality of streaming devices may include performing an ultra-wideband (UWB) distance measurement for each of the plurality of devices.

Example 13K is the subject matter of any of Examples 1K to 12K, which may further include means for obtaining streaming content from the selected device after connection to the selected device.

Example 14K is the subject matter of any of Examples 1K to 13K, wherein the means for connecting to the selected device may include means for connecting to the selected device using Bluetooth technology.

Example 1L is a wireless host device including one or more processors coupled to an interface of a wireless circuit, the one or more processors configured to: detect a presence of a plurality of accessory devices, wherein the plurality of devices each are available for establishing a connection to the wireless host device; determine a prioritized order of connections between the wireless host device and the plurality of accessory devices; select one of the plurality of accessory devices for connection based on the determined prioritized order of connections; and connect the wireless host device to the selected accessory device.

Example 2L is the subject matter of Example 1L, wherein to select may include selecting an accessory device having a highest priority connection of the determined prioritized order of connections

Example 3L is the subject matter of Example 1L or 2L, wherein to determine the prioritized order of connections may include to: determine proximity distances respectively between the wireless host device and the plurality of accessory devices, wherein to determine the prioritized order of connections, higher priority is given to connections with accessory devices having smaller proximity distances to the wireless host device and lower priority to connections with accessory devices with longer proximity distances to the wireless host device.

Example 4L is the subject matter of Example 3L, wherein to determine the proximity distances between the wireless host device between the plurality of accessory devices may include for each second device: determine a received signal strength indicator (RSSI) and measured power; and determine the proximity distance based at least on the RSSI and the measured power.

Example 5L is the subject matter of Example 3L or 4L, wherein to determine the prioritized order of connections to the plurality of accessory devices may further include to determine a user intent indication for each of the plurality of accessory devices, wherein the prioritized order of connections is further based on the determined user intent indications of the plurality of accessory devices.

Example 6L is the subject matter of Example 5L, wherein to determine the user intent indication for each of the plurality of accessory devices may include to determine whether a user is attached to each of the plurality of accessory devices, wherein for the prioritized order of connections, a higher priority is given to connections with devices determined to be attached to a user.

Example 7L is the subject matter of any of Examples 1L to 6L, wherein to determine the prioritized order of connections to the plurality of accessory devices may further include to: determine a device type for each of the plurality of devices, wherein the prioritized order of connections is further based on the determined device types of the plurality of accessory devices.

Example 8L is the subject matter of any of Examples 1L to 7L, wherein after connecting to the selected one of the plurality of accessory devices, the one or more processors may be further configured to disconnect one or more previously established connections.

Example 9L is the subject matter of any of Examples 1L to 8L, wherein the one or more processors may be further configured to: after connecting to the selected one of the plurality of accessory devices, detect a presence of a second plurality of accessory devices, wherein the second plurality of accessory devices each are available for establishing a connection; determine a second prioritized order of connections to the second plurality of accessory devices; and select a second selected accessory device based on the second prioritized order of connections; and determine whether to maintain a current connection.

Example 10L is the subject matter of Example 9L, wherein to determine whether to maintain a current connection may include to determine maintain the current connection based on a content of media streaming in the current connection.

Example 11L is the subject matter of Example 10L, wherein to determine whether to maintain a current connection may include to determine maintain the current connection or based on a determined type of application executing on the selected device and using the current connection.

Example 12L is the subject matter of Example 7L, wherein to determine whether to maintain a current connection may include to determine not to maintain the current connection, and wherein the one or more processors is further configured to connect the wireless host device to a second selected accessory device based on the second prioritized order of connections.

Example 13L is the subject matter of Example 2L to 12L, wherein the plurality of second accessory devices and the wireless host device may each be configured to wirelessly communicate using a Bluetooth protocol.

Example 1M is a non-transitory computer readable medium having instructions that when executed by processing circuitry of a wireless device causes the processing circuitry to: detect a presence of a plurality of accessory devices, wherein the plurality of devices each are available for establishing a connection to the wireless host device; determine a prioritized order of connections between the wireless host device and the plurality of accessory devices; select one of the plurality of accessory devices for connection based on the determined prioritized order of connections; and connect the wireless host device to the selected accessory device.

Example 2M is the subject matter of Example 1M, wherein to select may include to select an accessory device having a highest priority connection of the determined prioritized order of connections

Example 3M is the subject matter of Example 1M or 2M, wherein to determine the prioritized order of connections may include to: determine proximity distances respectively between the wireless host device and the plurality of accessory devices, wherein to determine the prioritized order of connections, higher priority is given to connections with accessory devices having smaller proximity distances to the wireless host device and lower priority is given to connections with accessory devices with longer proximity distances to the wireless host device.

Example 4M is the subject matter of Example 3M, wherein to determine the proximity distances between the wireless host device between the plurality of accessory devices includes for each second device to: determine a received signal strength indicator (RSSI) and measured power; and determine the proximity distance based at least on the RSSI and the measured power.

Example 5M is the subject matter of Example 3M or 4M, wherein to determine the prioritized order of connections to the plurality of accessory devices further may include to: determine a user intent indication for each of the plurality of accessory devices, wherein the prioritized order of connections is further based on the determined user intent indications of the plurality of accessory devices.

Example 6M is the subject matter of Example 5M, wherein to determine the user intent indication for each of the plurality of accessory devices may include to determine whether a user is attached to each of the plurality of accessory devices, wherein for the prioritized order of connections, a higher priority is given to connections with devices determined to be attached to a user.

Example 7M is the subject matter of any of Examples 1M to 6M, wherein to determine the prioritized order of connections to the plurality of accessory devices may further include to: determine a device type for each of the plurality of devices, wherein the prioritized order of connections is further based on the determined device types of the plurality of accessory devices.

Example 8M is the subject matter of any of Examples 1M to 7M, wherein after connecting to the selected one of the plurality of accessory devices, the processing circuitry may be further caused to disconnect one or more previously established connections.

Example 9M is the subject matter of any of Examples 1M to 8M, wherein the processing circuitry may be further caused to: after connecting to the selected one of the plurality of accessory devices, detect a presence of a second plurality of accessory devices, wherein the second plurality of accessory devices each are available for establishing a connection; determine a second prioritized order of connections to the second plurality of accessory devices; and selecting a second selected accessory device based on the second prioritized order of connections; and determine whether to maintain a current connection.

Example 10 is the subject matter of Example 9M, wherein to determine whether to maintain a current connection may include to determine maintain the current connection based on a content of media streaming in the current connection.

Example 11M is the subject matter of Example 10M, wherein to determine whether to maintain a current connection may include to determine maintain the current connection or based on a determined type of application executing on the selected device and using the current connection.

Example 12M is the subject matter of Example 7M, wherein to determine whether to maintain a current connection may include to determine not to maintain the current connection, and wherein the processing circuitry is further caused to connect the wireless device to a second selected accessory device based on the second prioritized order of connections.

Example 13M is the subject matter of any of Examples 2M to 13M, wherein the plurality of second accessory devices and the wireless host device may each be configured to wirelessly communicate using a Bluetooth protocol.

Example IN is a method of connection for a wireless host device, the method including: detecting a presence of a plurality of accessory devices, wherein the plurality of devices each are available for establishing a connection to the wireless host device; determining a prioritized order of connections between the wireless host device and the plurality of accessory devices; selecting one of the plurality of accessory devices to connect to, wherein the selection is based on the determined prioritized order of connections; and connecting the wireless host device to the selected accessory device.

Example 2N is the subject matter of Example 1N, wherein selecting may include selecting the accessory device having a highest priority connection of the determined prioritized order of connections.

Example 3N is the subject matter of Example 1N or 2N, wherein the wireless host device may be configured to communicate wirelessly device and to stream content, and the plurality of devices each are available for establishing a wireless connection.

Example 4N is the subject matter of Example 3N, wherein determining the prioritized order of connections may include: determining proximity distances between the wireless host device and the plurality of accessory devices, wherein for determining the prioritized order of connections, higher priority is given to connections with accessory devices having smaller proximity distances to the wireless host device and lower priority to connections with accessory devices with longer proximity distances to the wireless host device.

Example 5N is the subject matter of Example 4N, wherein determining the proximity distances between the wireless host device between the plurality of accessory devices may include for each second device: determining a received signal strength indicator (RSSI) and measured power; and determining the proximity distance based at least on the RSSI and the measured power.

Example 6N is the subject matter of Example 4N or 5N, wherein determining the prioritized order of connections to the plurality of accessory devices may further include determining a user intent indication for each of the plurality of accessory devices, wherein the prioritized order of connections is further based on the determined user intent indications of the plurality of accessory devices.

Example 7N is the subject matter of Example 6N, wherein determining the user intent indication for each of the plurality of accessory devices may include determining whether a user is attached to each of the plurality of accessory devices, wherein for the prioritized order of connections, a higher priority is given to connections with devices determined to be attached to a user.

Example 8N is the subject matter of any of Example 4N to 7N, wherein determining the prioritized order of connections to the plurality of accessory devices may further include: determining a device type for each of the plurality of devices, wherein the prioritized order of connections is further based on the determined device types of the plurality of accessory devices.

Example 9N is the subject matter of any of Examples 1N to 8N, which may further include: after connecting to the selected one of the plurality of accessory devices, disconnecting one or more previously established connections.

Example 10N is the subject matter of any of Examples 1N to 9N, which may further include after connecting to the selected one of the plurality of accessory devices, detecting a presence of a second plurality of accessory devices, wherein the second plurality of accessory devices each are available for establishing a connection; determining a second prioritized order of connections to the second plurality of accessory devices; selecting a second selected accessory device based on the second prioritized order of connections; and determining whether to maintain a current connection.

Example 11N is the subject matter of Example ION, wherein determining whether to maintain a current connection may include determining maintain the current connection based on a content of media streaming in the current connection.

Example 12N is the subject matter of Example 10N, wherein determining whether to maintain a current connection may include determining maintain the current connection or based on a determined type of application executing on the selected device and using the current connection.

Example 13N is the subject matter of Example 10N, wherein determining whether to maintain a current connection may include determining not to maintain the current connection, and further including connecting the wireless host device to a second selected accessory device based on the second prioritized order of connections.

Example 14N is the subject matter of any of Examples 2N to 13N, wherein the plurality of second accessory devices and the wireless host device may each be configured to wirelessly communicate using a Bluetooth protocol.

Example 1O is a wireless host device including: means for detecting a presence of a plurality of accessory devices, wherein the plurality of devices each are available for establishing a connection to the wireless host device; means for determining a prioritized order of connections between the wireless host device and the plurality of accessory devices; means for selecting one of the plurality of accessory devices to connect to, wherein the selection is based on the determined prioritized order of connections; and means for connecting the host device to the selected accessory device.

Example 2O is the subject matter of Example 1O, wherein the means for selecting may include means for selecting the accessory device having a highest priority connection of the determined prioritized order of connections

Example 3O is the subject matter of Example 1O or 2O, wherein the wirelessly host device includes means for wireless streaming content, and the plurality of accessory devices each are available for establishing a wireless connection.

Example 4O is the subject matter of Example 3O, wherein the means for determining the prioritized order of connections may include: means for determining proximity distances between the host device and the plurality of accessory devices, wherein for determining the prioritized order of connections, a higher priority is given to connections with accessory devices having smaller proximity distances to the host device and a lower priority to connections with accessory devices with longer proximity distances to the host device.

Example 5O is the subject matter of Example 4O, wherein the means for determining the proximity distances between the host device between the plurality of accessory devices may include for each second device: means for determining a received signal strength indicator (RSSI) and measured power; and means for determining the proximity distance based at least on the RSSI and the measured power.

Example 6O is the subject matter of Example 4O or 5O, wherein the means for determining the prioritized order of connections to the plurality of accessory devices may further include: means for determining a user intent indication for each of the plurality of accessory devices, wherein the prioritized order of connections is further based on the determined user intent indications of the plurality of accessory devices.

Example 7O is the subject matter of Example 6O, wherein the means for determining the user intent indication for each of the plurality of accessory devices may include means for determining whether a user is attached to each of the plurality of accessory devices, wherein for the prioritized order of connections, higher priority is weighted to connections with devices determined to be attached to a user.

Example 8O is the subject matter of any of Examples 4O to 7O, wherein the means for determining the prioritized order of connections to the plurality of accessory devices may further include: means for determining a device type for each of the plurality of devices, wherein the prioritized order of connections is further based on the determined device types of the plurality of accessory devices.

Example 9O is the subject matter of any of Examples 1O to 8O, which may further include: means for disconnecting one or more previously established connections after connecting to the selected one of the plurality of accessory devices.

Example 10O is the subject matter of any of Examples 1O to 9O, which may further include means for detecting a presence of a second plurality of accessory devices, wherein the second plurality of accessory devices each are available for establishing a connection after connecting to the selected one of the plurality of accessory devices; means for determining a second prioritized order of connections to the second plurality of accessory devices; and means for selecting a second selected accessory device based on the second prioritized order of connections; and means for determining whether to maintain a current connection.

Example 11O is the subject matter of Example 10O, wherein the means for determining whether to maintain a current connection may include means for determining maintain the current connection based on a content of media streaming in the current connection.

Example 12O is the subject matter of Example 10O, wherein the means for determining whether to maintain a current connection may include means for determining maintain the current connection or based on a determined type of application executing on the selected device and using the current connection.

Example 13O is the subject matter of Example 10O, wherein the means for determining whether to maintain a current connection may include means for determining not to maintain the current connection, and the method further comprising: means for connecting the host device to a second selected accessory device based on the second prioritized order of connections.

Example 14O is the subject matter of any of Examples 2O to 13O, wherein the plurality of second accessory devices and the host device each may include means for wirelessly communicating using a Bluetooth protocol.

Example 1P is a wireless device including one or more processors coupled to an interface of a wireless circuit, the one or more processors configured to: detect a presence of a plurality of host devices configured to stream media and available for establishing a connection to the wireless device; determine a prioritized order of connections between the wireless device and each the plurality of host devices; select one of the plurality of host devices based on the determined prioritized order of connections; and wirelessly connect the wireless device to a selected host device.

Example 2P is the subject matter of Example 1P, wherein to connect the wireless device to a selected one of the plurality of host devices based on the determined prioritized order of connections may include to select the host device with a highest priority connection.

Example 3P is the subject matter of Example 2P, wherein to determine the prioritized order of connections to the plurality of host devices may include to: determine proximity distances between the wireless device and the plurality of host devices, wherein for the prioritized order of connections, a higher priority is given to connections with host devices having shorter proximity distances to the wireless device and lower priority is given to connections with host devices with greater proximity distances to the host device.

Example 4P is the subject matter to Example 3P, wherein to determine the proximity distances between the wireless device and the plurality of host devices may include the one or more processors further configured for each second device to: determine a received signal strength indicator (RSSI) and measured power; and determine a distance based at least on the RSSI and measured power.

Example 5P is the subject matter of Example 3P or 4P, wherein to determine the prioritized order of connections to the plurality of host devices may further include to: determine a user engagement for each of the plurality of host devices, wherein for the prioritized order of connections, higher priority is weighted to connections with host devices having greater user engagement and lower priority is weighted to connections with host devices having lower user engagement.

Example 6P is the subject matter of any of Examples 2P to 5P, wherein to determine the prioritized order of connections to the plurality of host devices may further include to determine a device type for each of the plurality of host devices, wherein the prioritized order of connections is further based on the determined device types of the plurality of host devices.

Example 7P is the subject matter of any of Examples 1P to 6P, wherein the one or more processors may be further configured to: after establishing the connection to the selected one of the plurality of host devices, disconnect one or more previous established connections between the wireless device and one or more host devices other than the selected host device.

Example 8P is the subject matter of any of Examples 1P to 7P, wherein the one or more processors may be further configured to: after establishing the connection to the selected one of the plurality of host devices, determine that the selected host device is currently idle; detect a presence of a second plurality of host devices are configured to stream media and are each available for establishing a connection; determine a second prioritized order of connections to the second plurality of host devices; select a second host device from the second plurality of host devices based on the second prioritized order of connections; and connect the wireless device to the second selected host device.

Example 9P is the subject matter of Example 8P, wherein to determine the selected host device is idle may include to determine whether the selected host device is currently streaming media through a current connection to the wireless device.

Example 10P is the subject matter of any of Examples 1P to 9P, wherein the one or more processors may be configured to cause the wireless device to communicate and wireless connect using a Bluetooth protocol.

Example 1Q is a method of connection for a user device including: detecting a presence of a plurality of host devices configured to stream media and available for establishing a connection to the user device; determining a prioritized order of connections between the user device and each the plurality of host devices; selecting one of the plurality of host devices based on the determined prioritized order of connections; and connecting the user device to a selected host device.

Example 2Q is the subject matter of Example 1Q, wherein connecting the user device to a selected one of the plurality of host devices based on the determined prioritized order of connections may include selecting the host device with the highest priority connection.

Example 3Q is the subject matter of Example 1Q or 2Q, wherein the user device may be configured to wirelessly communicate, and the plurality of host devices each are available for establishing a wireless connection with the user device.

Example 4Q is the subject matter of Example 3Q, wherein determining the prioritized order of connections to the plurality of host devices may include: determining proximity distances between the user device and the plurality of host devices, wherein for the prioritized order of connections, higher priority is given to connections with host devices having shorter proximity distances to the user device and lower priority is given to connections with host devices with greater proximity distances to the host device.

Example 5Q is the subject matter of Example 4Q, wherein determining the proximity distances between the user device and the plurality of host devices may include for each second device: determining a received signal strength indicator (RSSI) and measured power; and determining a distance based at least on the RSSI and measured power.

Example 6Q is the subject matter of Example 4Q or 5Q, wherein determining the prioritized order of connections to the plurality of host devices may further include: determining a user engagement for each of the plurality of host devices, wherein for the prioritized order of connections, a higher priority is weighted to connections with host devices having greater user engagement and lower priority is weighted to connections with host devices having lower user engagement.

Example 7Q is the subject matter of any of Examples 3Q to 6Q, wherein determining the prioritized order of connections to the plurality of host devices may further include: determining a device type for each of the plurality of host devices, wherein the prioritized order of connections is further based on the determined device types of the plurality of host devices.

Example 8Q is the subject matter of any of Examples 1Q to 7Q, which may further include after establishing the connection to the selected one of the plurality of host devices, disconnecting one or more previous established connections between the user device and one or more host devices other than the selected host device.

Example 9Q is the subject matter of any of Examples 1Q to 8Q, which may further include after establishing the connection to the selected one of the plurality of host devices, determining that the selected host device is currently idle; detecting a presence of a second plurality of host devices are configured to stream media and are each available for establishing a connection; determining a second prioritized order of connections to the second plurality of host devices; selecting a second host device from the second plurality of host devices based on the second prioritized order of connections; and connecting the user device to the second selected host device.

Example 10Q is the subject matter of Example 9Q, wherein determining the selected host device is idle may include determining whether the selected host device is currently streaming media through a current connection to the user device.

Example 11Q is the subject matter of any of Examples 2Q to 10Q, wherein the plurality of host devices and the user device each may each be configured to wireless communicate using a Bluetooth protocol.

Example 1R is a wireless device including: means for detecting a presence of a plurality of host devices configured to stream media and available for establishing a connection to the wireless device; means for determining a prioritized order of connections between the wireless device and each the plurality of host devices; means for selecting one of the plurality of host devices based on the determined prioritized order of connections; and means for wirelessly connecting the wireless device to a selected host device.

Example 2R is the subject matter of Example 1R, wherein the means for connecting the wireless device to a selected one of the plurality of host devices based on the determined prioritized order of connections may include means for selecting the host device with the highest priority connection.

Example 3R is the subject matter of Example 2R, wherein the means for determining the prioritized order of connections to the plurality of host devices may include: means for determining proximity distances between the wireless device and the plurality of host devices, wherein for the prioritized order of connections, a higher priority is given to connections with host devices having shorter proximity distances to the wireless device and a lower priority is given to connections with host devices with greater proximity distances to the host device.

Example 4R is the subject matter of Example 3R, wherein the means for determining the proximity distances between the wireless device and the plurality of host devices includes, for each second device: means for determining a received signal strength indicator (RSSI) and measured power; and means for determining a distance based at least on the RSSI and measured power.

Example 5R is the subject matter of Example 3R or 4R, wherein the means for determining the prioritized order of connections to the plurality of host devices may further include: means for determining a user engagement for each of the plurality of host devices, wherein for the prioritized order of connections, a higher priority is weighted to connections with host devices having greater user engagement and a lower priority is weighted to connections with host devices having lower user engagement.

Example 6R is the subject matter of any of Examples 2R to 5R, wherein the means for determining the prioritized order of connections to the plurality of host devices may further include: means for determining a device type for each of the plurality of host devices, wherein the prioritized order of connections is further based on the determined device types of the plurality of host devices.

Example 7R is the subject matter of any of Examples 1R to 6R, may further include: means for disconnecting one or more previous established connections between the wireless device and one or more host devices other than the selected host device after establishing the connection to the selected one of the plurality of host devices.

Example 8R is the subject matter of any of Examples 1R to 7R, which may further include means for determining that the selected host device is currently idle after establishing the connection to the selected one of the plurality of host devices; means for detecting a presence of a second plurality of host devices are configured to stream media and are each available for establishing a connection; means for determining a second prioritized order of connections to the second plurality of host devices; means for selecting a second host device from the second plurality of host devices based on the second prioritized order of connections; and means for connecting the wireless device to the second selected host device.

Example 9R is the subject matter of Example 8R, wherein the means for determining the selected host device is idle may include: means for determining whether the selected host device is currently streaming media through a current connection to the wireless device.

Example 10R is the subject matter of any of Examples 1R to 9R, wherein the means for wireless connecting may include means for using a Bluetooth protocol to connect.

While the above descriptions and connected figures may depict electronic device components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

**Claims**

1. A wireless device, comprising:

an interface; and
one or more processors coupled to the interface, the one or more processors configured to:

obtain an indication to perform a multi-user time-synchronized action;
generate a plurality of messages, at least one of a plurality of the messages indicating the multi-user time-synchronized action to be performed; and
wirelessly transmit a series of broadcast beacons each respectively including a one of the plurality of generated messages.

2. The wireless device of claim 1,
wherein to wirelessly transmit the series of broadcast beacons comprises to respectively transmit the series of broadcast beacons at a plurality of intervals.

3. The wireless device of claim 2,
wherein each of the plurality of messages includes a scheduled time indicating when the multi-user time-synchronized action is to be performed.

4. The wireless device of claim 3,
wherein the scheduled time indicates that the multi-user time-synchronized action is to be performed at a terminally transmitted broadcast beacon of the series broadcast beacons.

5. The wireless device any of claims 1 to 4,
wherein the wireless transmission of the series of broadcast beacons is performed using a Bluetooth protocol and wherein the broadcast beacons are Bluetooth broadcast beacons.

6. A wireless device comprising one or more processors coupled to an interface of a wireless circuit, the one or more processors configured to:
wirelessly obtain a series of broadcast beacons, wherein each of the obtained broadcast beacons includes a message indicating a scheduled time when a multi-user time-synchronized action is to be performed; and
perform an action for the multi-user time-synchronized action at the scheduled time.

7. The wireless device of claim 6,
wherein to obtain the series of broadcast beacons comprises to obtain the series of broadcast beacons respectively at predefined intervals.

8. The wireless device of claim 7,
wherein each message included with the obtained series of broadcast beacons indicates a timing or spacing between the predefined intervals.

9. The wireless device of any of claims 6 to 8,
wherein each scheduled time indicates the multi-user time-synchronized action is to be performed at a terminally transmitted broadcast beacon of the series broadcast beacons.

10. The wireless device of claim 9,
wherein the scheduled time of each message indicates a number of intervals between transmission of the respective broadcast beacon including the message with the scheduled time and the terminally transmitted broadcast beacon.

11. The wireless device of any of claims 6 to 10, wherein the one or more processors is further configured to:
prior to obtaining the series of broadcast beacons, to join a network including a device transmitting the series of broadcast beacons.

12. The wireless device of any of claims 9 to 11, wherein the one or more processors is further configured to:
wherein to perform the action for multi-user time-synchronized action comprises to perform the action synchronized with the terminally transmitted broadcast beacon of the series of broadcast beacons.

**13.** The wireless device of claim 7,
wherein to perform the action for the multi-user time-synchronized action comprises to:

capture a media synchronized with the terminally transmitted broadcast beacon, and
transfer the captured media to another device or network.

**14.** The wireless device of claim 13,
wherein the captured media is an image.

**15.** The wireless device any of claims 6 to 13,
wherein the wireless transmission of the series of broadcast beacons is performed using a Bluetooth protocol and
wherein the broadcast beacons are Bluetooth broadcast beacons.

100a

100c

100b

100d

FIG. 1

CPU
110

STORAGE
130

MEMORY
120

I/O
140

MANAGEMENT
170

WIRELESS
CIRCUITRY
170

**150**

**100**

FIG. 2

**FIG. 3**

detecting a plurality of streaming devices — 410

determining a proximity distance to each of the plurality of streaming devices — 420

Maintain current connection — 445

selecting for connection a device from the plurality of streaming devices based on at least the determined proximity distances — 430

No

user confirmation to connect to selected device — 435

Yes

connecting to the selected device — 440

FIG. 4

FIG. 5

EP 4 366 338 A1

detecting a presence of a plurality of host devices — 610

determining a prioritized order of connections between the accessory device and each the plurality of host devices — 620

selecting one of the plurality of host devices based on the determined prioritized order of connections — 630

connecting the electronic device to a selected host device — 640

FIG. 6

detecting a presence of a plurality of accessory devices, wherein the plurality of accessory devices each are available for establishing a connection to the host device
710

determining a prioritized order of connections between the host device and the plurality of accessory devices
720

selecting one of the plurality of accessory devices based on the determined prioritized order of connections
730

connecting the host device to a selected accessory device
740

FIG. 7

FIG. 8

obtaining an indication to perform a multi-user time-synchronized action  910

generating a plurality of messages each indicating the multi-user time-synchronized action to be performed  920

wirelessly transmitting a series of broadcast beacons each respectively including a one of the plurality of generated messages  930

performing the multi-user time-synchronized action  940

performing one or more post time-synchronized actions  950

FIG. 9

FIG. 10

wirelessly obtaining a series of broadcast beacons, wherein each of the obtained broadcast beacons includes a message indicating a scheduled time when a multi-user time-synchronized action is to be performed 1110

performing an action for the multi-user time-synchronized action at the scheduled time, wherein the action is performed time-synchronized with the scheduled time 1120

performing one or more post time-synchronized actions 1130

FIG. 11

Europäisches
Patentamt
European
Patent Office
Office européen
des brevets

# EUROPEAN SEARCH REPORT

**Application Number**

EP 22 20 5878

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/365582 A1 (ERAMIAN DAVID EDWARD [US]) 17 December 2015 (2015-12-17) * abstract; figures 1-5 * * paragraphs [0029] - [0030], [0057], [0064] - [0077] * | 1-15 | INV. H04W4/30 |
| X | US 2012/249806 A1 (GONG MICHELLE X [US] ET AL) 4 October 2012 (2012-10-04) * the whole document * | 1-15 | |
| X | US 2016/094773 A1 (MACIUCA DRAGOS B [US] ET AL) 31 March 2016 (2016-03-31) * abstract; figures 4,6,11 * * paragraphs [0033] - [0040], [0046] - [0061], [0079] * | 1-15 | |

**TECHNICAL FIELDS SEARCHED (IPC)**

H04N
H04W

The present search report has been drawn up for all claims

| Place of search | Date of completion of the search | Examiner |
|---|---|---|
| Munich | 15 April 2023 | Kappatou, Erasmia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 5878

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2023

| Patent document cited in search report | | Publication date | Patent family member(s) | | Publication date |
|---|---|---|---|---|---|
| US 2015365582 | A1 | 17-12-2015 | US | 2015365582 A1 | 17-12-2015 |
| | | | US | 2019268529 A1 | 29-08-2019 |
| | | | US | 2021329162 A1 | 21-10-2021 |
| US 2012249806 | A1 | 04-10-2012 | CN | 103477627 A | 25-12-2013 |
| | | | DE | 112011105104 T5 | 02-01-2014 |
| | | | TW | 201245972 A | 16-11-2012 |
| | | | US | 2012249806 A1 | 04-10-2012 |
| | | | US | 2014293013 A1 | 02-10-2014 |
| | | | WO | 2012134572 A1 | 04-10-2012 |
| US 2016094773 | A1 | 31-03-2016 | NONE | | |

EPO FORM P0459

For more details about this annex : see Official Journal of the European Patent Office, No. 12/82